# EUROPÄISCHE PATENTANMELDUNG

(11) **EP 4 417 641 A1**
(43) Veröffentlichungstag der Anmeldung: **21.08.2024**
(21) Anmeldenummer: 23157080.5
(22) Anmeldetag: 16.02.2023
(51) Int. Cl.: C08J 3/12, B33Y 10/00, B33Y 70/10, B33Y 80/00, B29C 64/141, C08J 3/20

(54) **PULVER INSBESONDERE FÜR EINE SCHICHTWEISE HERSTELLUNG VON DREIDIMENSIONALEN OBJEKTEN**

(71) Anmelder: Evonik Operations GmbH, 45128 Essen (DE)
(72) Erfinder: Die Erfindernennung liegt noch nicht vor
(74) Vertreter: Evonik Patent Association

(57) **Zusammenfassung**

Die vorliegende Erfindung betrifft ein Pulver für eine Verwendung in Verfahren zur schichtweisen werkzeuglosen Herstellung von dreidimensionalen Objekten. Das Pulver umfasst ein Polymerpulver, das durch bestimmte Volumenanteile an Partikeln mit einer Partikelgröße kleiner als 10,48 µm und an Partikeln mit einer Partikelgröße im Bereich von größer als oder gleich 10,48 µm bis kleiner als 30,53 µm gekennzeichnet ist. Das Pulver weist gute Rieseleigenschaften auf, stellt ein ausreichend großes Prozessfenster bereit und ermöglicht die Herstellung von Bauteilen, die sich durch eine geringe Verzugsneigung auszeichnen. Die Erfindung betrifft auch Verfahren zur Herstellung des Pulvers, dessen Verwendung sowie Formkörper hergestellt unter Verwendung des Pulvers.

## Beschreibung

### TECHNISCHES GEBIET

Die vorliegende Erfindung betrifft ein Pulver insbesondere zur Verwendung in Verfahren zur schichtweisen werkzeuglosen Herstellung von dreidimensionalen Objekten. Die Erfindung betrifft ferner ein Verfahren zur Herstellung des Pulvers, ein Pulverbett umfassend das Pulver, Verwendungen des Pulvers sowie ein Formkörper hergestellt unter Verwendung des Pulvers.

### TECHNISCHER HINTERGRUND

Die zügige Bereitstellung von Prototypen oder Kleinserien ist eine in der jüngeren Zeit häufig gestellte Aufgabe. Verfahren, die dies ermöglichen, werden "Rapid Prototyping"-, "Rapid Manufacturing"- oder auch "Additive Fabrication"- Verfahren oder einfach auch "3D-Printing" genannt.

Besonders geeignet sind Verfahren, die auf der Basis von pulverförmigen Werkstoffen arbeiten, und bei denen schichtweise durch selektives Aufschmelzen und Verfestigen die gewünschten Strukturen werkzeuglos hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Entsprechend entfällt die Nacharbeit, Stützen zu entfernen. Nach Abkühlen und Verfestigen der zuvor Schicht für Schicht aufgeschmolzenen Bereiche kann der Formkörper dem Pulverbett entnommen werden. Die nach diesen Prinzipien arbeitenden Verfahren werden hierin unter dem Oberbegriff "Powder Bed Fusion"-Verfahren (im Folgenden kurz als PBF-Verfahren bezeichnet) zusammengefasst.

In PBF-Verfahren kann die Selektivität dabei beispielsweise über den Auftrag von Suszeptoren, Absorbern oder Inhibitoren, über Masken, fokussierte Energieeinbringung wie beispielsweise durch einen Laserstrahl, über Glasfasern oder mittels selektiver Auftragung des Pulvers erreicht werden. Der Energieeintrag wird üblicherweise über elektromagnetische Strahlung erreicht. Die Wellenlänge der elektromagnetischen Strahlung liegt dabei typischerweise im Bereich von 100 nm bis 10 cm, bevorzugt zwischen 400 nm bis 1600 nm oder zwischen 800 nm und 1060 nm. Die Quelle der Strahlung kann beispielsweise ein Mikrowellengenerator, ein geeigneter Laser, ein Heizstrahler oder eine Lampe aber auch Kombinationen davon sein.

Ein Beispiel für ein PBF-Verfahren, welches sich besonders gut für den Zweck des "Rapid Prototypings" eignet, ist das selektive Lasersintern, das ausführlich etwa in der US 6,136,948 A und WO 96/06881 A2 beschrieben wird. Bei diesem Verfahren werden Polymerpulver in einer Kammer selektiv kurz mit einem Laserstrahl belichtet, wodurch die Pulverpartikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Formkörper einfach und schnell hergestellt werden.

Andere geeignete PBF-Verfahren sind beispielsweise das SIV-Verfahren, wie in WO 01/38061 A1 beschrieben, oder ein Verfahren wie in EP 1 015 214 A1 bzw. US 6,531,086 B1 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 A1 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682 A1, DE 10 2004 012 683 A1, DE 10 2004 020 452 A1 und WO 2005/105412 A1 beschrieben.

Im Pulverbett von PBF-Verfahren können pulverförmige Substrate, insbesondere solche aus Polymeren verwendet werden. Eine Vielzahl von Polymeren und Copolymeren sind für diese Anwendung bekannt, darunter insbesondere Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamide, oder Gemische davon. In der DE 197 47 309 A1 wird beispielsweise ein Pulver beschrieben, welches sich für eine Anwendung in PBF-Verfahren eignet. Das darin offenbarte Polyamid 12-Pulver wird durch Umfällung eines zuvor durch Ringöffnung und anschließende Polykondensation von Laurinlactam hergestellten Polyamids erhalten. Das so erhaltene Polyamid 12-Pulver weist eine günstige Kombination von Schmelztemperatur, Erstarrungstemperatur und Schmelzenthalpie auf. Jedoch sind für die Prozessdurchführung und -sicherheit eines PBF-Verfahrens auch die Rieseleigenschaften des Pulvers von großer Bedeutung.

So müssen es die Rieseleigenschaften eines Pulvers für ein PBF-Verfahren erlauben, dass das Pulver während des Verfahrens problemlos transportiert und aufgetragen werden kann. Dies ist für das Polymerpulver, wie es durch das in der DE 197 47 309 A1 beschriebene Verfahren erhalten wird, nicht ausreichend gut gegeben. Zur Anpassung der Rieseleigenschaften wird Pulvern für PBF-Verfahren daher typischerweise eine Rieselhilfe zugesetzt. So offenbart die EP 1 443 073 A1 eine Pulverzusammensetzung, die neben dem Polymerpulver eine partikuläre, hydrophobierte oder hydrophobe Kieselsäure oder Mischungen davon umfasst. Nach der Lehre der EP 1 443 073 A1 ermöglicht dies die Einstellung einer von den Lagerbedingungen unabhängigen, guten Rieselfähigkeit. In der DE 31 13 392 A1 wird ein Verfahren zum Vermindern der elektrostatischen Aufladung von thermoplastischen pulverförmigen Polyamiden offenbart, welches wiederum die Neigung zur Bildung von Agglomeraten reduziert. Das nach diesem Verfahren hergestellte Beschichtungspulver aus thermoplastischen Kunststoffen enthält neben thermoplastischen pulverförmigen Polyamiden einen Zusatz von geringen Mengen eines hochdispersen anorganischen Pulvers, wobei das hochdisperse, anorganische Pulver mit einem antistatischen Mittel beschichtet ist.

Ein Nachteil des Zusatzes einer anorganischen Rieselhilfe ist jedoch, dass diese zu Problemen bei der Verarbeitung von Pulvermaterialien im PBF-Verfahren führt. Die anorganischen Partikel wirken als Rekristallisationskeime und führen zu einem verfrühten Erstarren der Schmelze, welches wiederum zu einem Verzug der Schmelzschicht führt. Es entsteht der sogenannte "curl", der zu Bauprozessabbrüchen in PBF-Verfahren führen kann und aus Schwund beim Erstarren resultiert. Die hergestellten Bauteile zeigen zudem gemeinhin einen erhöhten Verzug. Diese Effekte können durch die Erhöhung des Energieeintrags und der Bautemperatur während des Bauprozesses prinzipiell reduziert werden, jedoch führen diese Maßnahmen wiederum zu anderen Problemen wie etwa eine erhöhte thermische Belastung des Polymerpulvers und eine verstärkte Versinterung des Pulverkuchens. Die Wirkung der anorganischen Rieselhilfen beruht auch auf der Wirkung als Trennmittel, welches die Partikel voneinander trennt. Dieses ist bei dem Auftrag einer Pulverschicht gewünscht, aber bei dem Aufschmelzvorgang der Partikel von Nachteil, da dies das Verschmelzen und Versintern der Partikel behindert.

Aufgabe der vorliegenden Erfindung ist daher die Bereitstellung eines Pulvers mit guten Rieseleigenschaften für ein PBF-Verfahren, welches die vorstehend genannten Nachteile des Standes der Technik vermindert oder vermeidet.

### ZUSAMMENFASSUNG

Überraschenderweise wurde gefunden, dass die Aufgabe durch ein Pulver insbesondere zur Verwendung in einem Powder-Bed-Fusion-Verfahren gelöst werden kann, welches ein Polymerpulver umfasst, wobei das Polymerpulver einen Volumenanteil von 0,5% bis 15% an Partikeln mit einer Partikelgröße kleiner als 10,48 µm und einen Volumenanteil von nicht mehr als 4,0% an Partikeln mit einer Partikelgröße im Bereich von größer als oder gleich 10,48 µm und kleiner als 30,53 µm aufweist, wobei die Volumenanteile und die Partikelgrößen mittels dem hierin dargestellten Verfahren basierend auf Laserbeugung bestimmt werden. Optional kann das Pulver eine oder mehrere anorganische Rieselhilfen umfassen, wobei deren Anteil bevorzugt weniger als 0,1 Gewichts-% bezogen auf das Gesamtgewicht des Pulvers beträgt.

Im Stand der Technik wird üblicherweise davon ausgegangen, dass Pulver mit signifikanten Anteilen feinteiliger Partikel vergleichsweise schlechte Rieseleigenschaften aufweisen. Überraschenderweise wurde nun gefunden, dass durch die anspruchsgemäße Einstellung der Volumenanteile an feinteiligen Partikeln polymerbasierte Pulver erhalten werden können, die sich bereits ohne Zusatz einer anorganischen Rieselhilfe durch gute Rieseleigenschaften auszeichnen. Dadurch können die oben erwähnten Nachteile, die mit dem Einsatz von anorganischen Rieselhilfen verbunden sind, vermieden werden. So weisen die Pulver der vorliegenden Erfindung ein größeres Prozessfenster auf als solche Pulver, die eine anorganische Rieselhilfe umfassen. Weiterhin erlaubt das erfindungsgemäße Pulver im Gegensatz zu Pulvern mit anorganischen Rieselhilfen die Herstellung von Bauteilen, die eine geringe Verzugsneigung aufweisen. Das Auftreten des "curl"-Effekts in PBF-Verfahren kann so vermieden werden.

Die vorliegende Erfindung betrifft auch ein Verfahren zur Herstellung des erfindungsgemäßen Pulvers, wobei das Polymerpulver durch zumindest ein Kombinieren von mindestens einem ersten Pulver umfassend polymerhaltige Partikel und einem zweiten Pulver umfassend polymerhaltige Partikel bereitgestellt wird.

Die Erfindung betrifft weiterhin ein Pulverbett insbesondere zur Verwendung in einer Fusionszone eines Powder-Bed-Fusion-Verfahrens, wobei das Pulverbett das hierin offenbarte Pulver umfasst, wobei das Pulver bevorzugt nach einem hierin beschriebenen Verfahren hergestellt ist.

Weiterhin richtet sich die vorliegende Erfindung auch auf die Verwendung des erfindungsgemäßen Pulvers oder des hierin offenbarten Pulverbetts in einem Powder-Bed-Fusion-Verfahren.

Außerdem stellt die vorliegende Erfindung Formkörper bereit, welche unter Verwendung eines hierin beschriebenen Pulvers oder Pulverbetts hergestellt werden, insbesondere mittels eines Powder-Bed-Fusion-Verfahrens.

### DETAILLIERTE BESCHREIBUNG

Sofern nicht anders angegeben, sind die in der folgenden Beschreibung und den beigefügten Ansprüchen angegebenen numerischen Parameter und Bereiche Näherungswerte. Dementsprechend können, sofern nicht ausdrücklich etwas anderes angegeben ist, alle Zahlen, die Werte, Bereiche, Mengen oder Prozentsätze ausdrücken, so gelesen werden, als ob ihnen das Wort "ungefähr" vorangestellt wäre, selbst wenn der Begriff nicht ausdrücklich vorangestellt ist. Ungeachtet der Tatsache, dass es sich bei den Zahlenbereichen und Parametern, die den breiten Anwendungsbereich der Erfindung beschreiben, um Näherungswerte handelt, werden die Zahlenwerte in den spezifischen Beispielen so genau wie möglich angegeben. Alle Zahlenwerte enthalten jedoch Fehler, die sich zwangsläufig aus der Standardabweichung ihrer jeweiligen Messung ergeben.

Jeder hier aufgeführte Zahlenbereich schließt alle darin enthaltenen Unterbereiche ein. Zum Beispiel soll ein Bereich von "1 bis 10" alle Unterbereiche zwischen und einschließlich des angegebenen Minimalwerts von 1 und des angegebenen Maximalwerts von 10 umfassen, d.h. alle Unterbereiche, die mit einem Minimalwert gleich oder größer als 1 beginnen und mit einem Maximalwert gleich oder kleiner als 10 enden, sowie alle Unterbereiche dazwischen, z. B. 1 bis 6,3 oder 5,5 bis 10 oder 2,7 bis 6,1. Alle Endpunkte von Bereichen und/oder Zahlen innerhalb dieser Bereiche können im Rahmen der vorliegenden Offenlegung kombiniert werden.

Der Begriff "umfassend" ist hierin so zu verstehen, dass er offen ist und das Vorhandensein zusätzlicher, nicht beschriebener oder nicht erwähnter Elemente, Materialien, Bestandteile oder Verfahrensschritte usw. nicht ausschließt. Die Begriffe "einschließlich", "enthaltend", "gebildet aus" und ähnliche Begriffe sind als Synonyme für "umfassend" zu verstehen. Der hier verwendete Begriff "bestehend aus" schließt das Vorhandensein nicht spezifizierter Elemente, Inhaltsstoffe, Verfahrensschritte usw. aus. Obwohl die Offenbarung im Sinne von "umfassend" beschrieben wurde, fallen auch "bestehend aus" oder "im Wesentlichen bestehend aus" in den Anwendungsbereich der vorliegenden Offenbarung.

Im Rahmen dieser Offenbarung bedeuten die Formulierungen "im Wesentlichen bestehend aus" und "im Wesentlichen gebildet aus" einem Material, dass die entsprechende Komponente ganz überwiegend aus dem benannten Material gebildet wird und andere Materialien allenfalls in geringen Mengen vorliegen. Die anderen Materialien werden im Allgemeinen nicht absichtlich zugesetzt, sondern stammen, wenn vorhanden, zum Beispiel aus Verunreinigungen oder unvollständigem Abtrennen. Die anderen Materialien sind üblicherweise in so geringen Mengen vorhanden, dass sie die Eigenschaften der betreffenden Komponente nicht merklich beeinflussen. Beispielweise kann mit "im Wesentlichen bestehend aus" und "im Wesentlichen gebildet aus" hierin gemeint sein, dass die jeweilige Komponente, wie etwa die jeweiligen Partikel, zu 95 Gewichts-% oder mehr, bevorzugt zu 99 Gewichts-% oder mehr, weiter bevorzugt zu 99,5 Gewichts-% oder mehr, besonders bevorzugt zu 99,9 Gewichts-% oder mehr aus dem benannten Material gebildet sind oder daraus bestehen.

Die Singularform von "ein", "die", "der" und "das" schließt hierin die Pluralform ein, sofern der Kontext nicht eindeutig etwas anderes vorschreibt.

Unter einem "Powder Bed Fusion"-Verfahren, kurz PBF-Verfahren, werden im Rahmen dieser Offenbarung Verfahren zur schichtweisen werkzeuglosen Herstellung von dreidimensionalen Formkörpern verstanden, bei denen selektiv Bereiche der jeweiligen Pulverschicht etwa durch Eintrag elektromagnetischer Energie aufgeschmolzen und die erhaltenen Formkörper durch Verfestigen der aufgeschmolzenen Bereiche und anschließender Entnahme aus dem Pulverbett erhalten werden. Ein besonders bevorzugtes Beispiel für ein PBF-Verfahren stellt etwa das selektive Lasersintern dar.

Der hierin verwendete Begriff "Polymer" ist so zu verstehen, dass darunter sowohl Homopolymere, das heißt Polymere, die sich von einem Monomertyp ableiten, als auch Copolymere, also solche Polymere, die sich von zwei oder mehr unterschiedlichen Monomertypen ableiten, fallen. Beispiele für Homopolymere sind etwa Polyamide wie Polyamid 11 und Polyamid 12. Als Beispiele für Copolymere können etwa Copolyamide wie Polyamid 6.12, Polyamid 10.12 und Polyamid 6.13 genannt werden.

Der Begriff "Pulver" ist im Kontext dieser Erfindung als Bezeichnung für einen Feststoff zu verstehen, der in Form einer Vielzahl feiner Partikel vorliegt. Die Partikel können sich dabei typischerweise bei Agitation des Pulvers frei zueinander bewegen. So kann das im Rahmen der vorliegenden Erfindung verwendete Pulver insbesondere rieselfähig sein. Das Pulver kann etwa durch die Abmessungen der Partikel von anderen partikulären Stoffen unterschieden werden. Demnach besteht ein Pulver üblicherweise im Wesentlichen aus Partikeln mit Abmessungen im Submillimeterbereich wie etwa unterhalb von 500 µm oder insbesondere unterhalb von 250 µm.

Wie bereits oben erwähnt, betrifft die vorliegende Erfindung ein Pulver insbesondere zur Verwendung in einem Powder-Bed-Fusion-Verfahren umfassend ein Polymerpulver, wobei das Polymerpulver einen Volumenanteil von 0,5% bis 15% an Partikeln mit einer Partikelgröße kleiner als 10,48 µm und einen Volumenanteil von nicht mehr als 4,0% an Partikeln mit einer Partikelgröße im Bereich von größer als oder gleich 10,48 µm und kleiner als 30,53 µm aufweist. Die Volumenanteile beziehen sich dabei auf das Gesamtvolumen des Polymerpulvers. Die Volumenanteile und die Partikelgrößen beziehen sich auf die mittels des weiter unten beschriebenen auf Laserbeugung basierenden Verfahrens bestimmte Partikelgrößenverteilung. Optional kann das Pulver eine oder mehrere anorganische Rieselhilfen umfassen, wobei deren Anteil bevorzugt weniger als 0,1 Gewichts-% bezogen auf das Gesamtgewicht des Pulvers beträgt. Bevorzugt ist das Pulver jedoch im Wesentlichen frei von anorganischer Rieselhilfe; das heißt anorganische Rieselhilfe liegt, wenn überhaupt, nur als Verunreinigung in geringer Menge vor. Ganz besonders bevorzugt ist das Pulver frei von anorganischer Rieselhilfe.

Unter einem Polymerpulver wird dabei ein Pulver verstanden, das Partikel umfasst, die aus einem Material gebildet sind, welches ein oder mehrere Polymere umfasst. Derartige Partikel werden hierin auch als polymerhaltige Partikel bezeichnet. Geeignete Polymere sind insbesondere thermoplastische Polymere. Die thermoplastischen Polymere sind dabei bevorzugt ausgewählt aus der Gruppe umfassend Polyolefine, Polyethylen, Polypropylen, Polyvinylchlorid, Polystyrol, Polycarbonate, Polyoxymethylen, Polyimide, Polysulfone, Poly-(N-methylmethacrylimide), Polycarbonat (PC)-Acrylnitril-Butadien-Styrol (ABS), lonomere, Poly(meth)acrylate wie Polymethylmethacrylat, Polyvinylidenflouriden, Polyetherketone, Polyaryletherketone, Polyamide sowie Copolymere, Mischungen und Kombinationen davon, wobei die thermoplastischen Polymere besonders bevorzugt Homopolyamide, Copolyamide oder eine Mischung von Homo- und Copolyamide umfassen. Besonders geeignete (Co-)Polyamide sind dabei Polyamid 12, Polyamid 11, Polyamid 6.10, Polyamid 6.12, Polyamid 10.12, Polyamid 6, Polyamid 6.6, Polyamid 6.13 oder Mischungen derselben, wobei Polyamid 12 und Polyamid 6.13 besonders bevorzugt sind. Ein besonders geeignetes Polyamid 12 ist zum Beispiel in der Offenlegungsschrift DE 197 47 309 A1 beschrieben. Ebenfalls bevorzugt ist Polypropylen. Polymerhaltige Partikel können neben den ein oder mehreren Polymeren optional auch ein oder mehrere Materialien umfassen, die keine Polymere darstellen. Derartige optionale Materialien können beispielweise aus nichtpolymeren, organischen Materialien sowie Materialien für Additive und Füllstoffe ausgewählt sein, wie sie hierin weiter unten im Zusammenhang optionaler eigenständiger Komponenten, die zusätzlich zu dem Polymerpulver im erfindungsgemäßen Pulver enthalten sein können, beschrieben sind. Beispielsweise können die Partikel mit einer Partikelgröße kleiner als 10,48 µm, die Partikel mit einer Partikelgröße im Bereich von größer als oder gleich 10,48 µm bis kleiner als 30,53 µm und/oder die Partikel größer als oder gleich 30,53 µm des Polymerpulvers jeweils polymerhaltige Partikel darstellen, die optional ein oder mehrere weitere Materialien umfassen können, die keine Polymere darstellen. Der Polymeranteil an den Materialien der Partikel des Polymerpulvers überwiegt jedoch üblicherweise. Typischerweise sind die Partikel des Polymerpulvers zu 70 Gewichts-% oder mehr, zu 80 Gewichts-% oder mehr, zu 85 Gewichts-% oder mehr, insbesondere zu 90 Gewichts-% oder mehr, bevorzugt zu 95 Gewichts-% oder mehr, weiter bevorzugt zu 99 Gewichts-% oder mehr aus einem oder mehreren Polymeren gebildet. Die verbleibenden Gewichtsanteile an den Partikeln des Polymerpulvers können dabei auf die ein oder mehreren, optionalen Materialien, die kein Polymer darstellen, entfallen. Bevorzugt weist das Polymerpulver im Wesentlichen nur Partikel auf, die im Wesentlichen aus einem oder mehreren Polymeren gebildet sind. Besonders bevorzugt weist das Polymerpulver nur Partikel auf, die aus einem oder mehreren Polymeren bestehen. Das erfindungsgemäße Pulver kann jedoch auch dann optional neben dem beschriebenen Polymerpulver noch weitere Bestandteile aus polymeren und/oder nichtpolymeren Materialien wie etwa anorganische Rieselhilfen, Füllstoffe oder weitere Additive umfassen, wie weiter unten beschrieben.

Das Polymerpulver des erfindungsgemäßen Pulvers weist wie bereits erwähnt einen Volumenanteil von 0,5% bis 15% an Partikeln mit einer Partikelgröße kleiner als 10,48 µm auf. Das Polymerpulver kann beispielsweise einen Volumenanteil an Partikeln mit einer Partikelgröße kleiner als 10,48 µm von mindestens 0,6%, insbesondere mindestens 0,8%, bevorzugt mindestens 1,0%, weiter bevorzugt mindestens 1,5%, besonders bevorzugt mindestens 2,0% aufweisen. Das Polymerpulver kann weiterhin beispielsweise einen Volumenanteil an Partikeln mit einer Partikelgröße kleiner als 10,48 µm von maximal 12%, bevorzugt maximal 10%, weiter bevorzugt maximal 8,0%, besonders bevorzugt maximal 6,0% aufweisen. Der Volumenanteil der Partikel mit einer Partikelgröße kleiner als 10,48 µm kann in einem durch eine beliebige Kombination vorstehend genannter Werte aufgespannten Bereich liegen. So kann das Polymerpulver beispielsweise einen Volumenanteil von 0,8% bis 12%, bevorzugt von 1,0% bis 10%, weiter bevorzugt von 1,5% bis 8,0%, besonders bevorzugt von 2,0% bis 6,0% an Partikeln mit einer Partikelgröße kleiner als 10,48 µm aufweisen. Der Gehalt an Partikeln mit einer Partikelgröße kleiner als 10,48 µm ist dabei nach oben durch die Abnahme der Mindestzündenergie begrenzt, die die Gefahr für Staubexplosionen und damit den notwendigen Sicherheitsaufwand bei der Handhabung des Pulvers erhöht.

Das Polymerpulver des erfindungsgemäßen Pulvers ist des Weiteren wie bereits erwähnt durch einen Volumenanteil von nicht mehr als 4,0% an Partikeln mit einer Partikelgröße im Bereich von größer als oder gleich 10,48 µm bis kleiner als 30,53 µm charakterisiert. Beispielsweise kann das Polymerpulver einen Volumenanteil von nicht mehr als 3,5%, insbesondere nicht mehr als 3,0%, bevorzugt nicht mehr als 2,5%, weiter bevorzugt nicht mehr als 2,0%, besonders bevorzugt nicht mehr als 1,6%, an Partikeln mit einer Partikelgröße im Bereich von größer als oder gleich 10,48 µm und kleiner als 30,53 µm aufweisen. Das Polymerpulver kann zum Beispiel einen Volumenanteil an Partikeln mit einer Partikelgröße im Bereich von größer als oder gleich 10,48 µm bis kleiner als 30,53 µm von 0% oder mehr, 0,1% oder mehr, oder 0,2% aufweisen. Der Volumenanteil der Partikel mit einer Partikelgröße im Bereich von größer als oder gleich 10,48 µm bis kleiner als 30,53 µm kann in einem durch eine beliebige Kombination vorstehend genannter Werte aufgespannten Bereich liegen. So kann das Polymerpulver beispielsweise einen Volumenanteil von 0% bis 3,0%, 0,1% bis 2,0%, oder 0,2% bis 1,6% an Partikeln mit einer Partikelgröße im Bereich von größer als oder gleich 10,48 µm bis kleiner als 30,53 µm aufweisen.

Bevorzugt kann das Polymerpulver beispielsweise einen Volumenanteil an Partikeln mit einer Partikelgröße kleiner als 10,48 µm von 1,0% bis 10% und zugleich einen Volumenanteil von Partikeln mit einer Partikelgröße im Bereich von größer als oder gleich 10,48 µm bis kleiner als 30,53 µm von nicht mehr als 3,0% aufweisen. Zum Beispiel kann das Polymerpulver einen Volumenanteil an Partikeln mit einer Partikelgröße kleiner als 10,48 µm von 1,5% bis 8,0% und zugleich einen Volumenanteil von Partikeln mit einer Partikelgröße im Bereich von größer als oder gleich 10,48 µm bis kleiner als 30,53 µm von nicht mehr als 2,0% aufweisen. Besonders bevorzugt weist das Polymerpulver einen Volumenanteil an Partikeln mit einer Partikelgröße kleiner als 10,48 µm von 2,0% bis 6,0% und zugleich einen Volumenanteil von Partikeln mit einer Partikelgröße im Bereich von größer als oder gleich 10,48 µm bis kleiner als 30,53 µm von nicht mehr als 1,6% auf.

Das hierin beschriebene Polymerpulver umfasst weiterhin Partikel mit einer Partikelgröße größer als oder gleich 30,53 µm in einem entsprechenden Volumenanteil des Polymerpulvers, sodass sich zusammen mit dem Volumenanteil der Partikel mit einer Partikelgröße kleiner als 10,48 µm und dem Volumenanteil der Partikel mit einer Partikelgröße im Bereich von größer als oder gleich 10,48 µm bis kleiner als 30,53 µm ein Gesamtvolumen des Polymerpulvers von 100% ergibt.

Das erfindungsgemäße Pulver kann durch das Verfahren zur Herstellung der Partikel des Polymerpulvers charakterisiert werden. Dabei können die Partikel des Polymerpulvers mit einer Partikelgröße kleiner als 10,48 µm, die Partikel Polymerpulvers mit einer Partikelgröße im Bereich von größer als oder gleich 10,48 µm bis kleiner als 30,53 µm und die Partikel Polymerpulvers mit einer Partikelgröße größer als oder gleich 30,53 µm mit demselben oder unterschiedlichen Verfahren hergestellt werden. Als geeignete Verfahren zur Herstellung der Partikel mit einer Partikelgröße kleiner als 10,48 µm, der Partikel mit einer Partikelgröße im Bereich von größer als oder gleich 10,48 µm bis kleiner als 30,53 µm und/oder der Partikel mit einer Partikelgröße größer als oder gleich 30,53 µm sind beispielweise Vermahlen, Fällung, Polymerisation, Schneiden von Fasern und Compoundieren einer Polymerschmelze in einem nicht homogen mischbaren Stoff zu nennen, wobei Vermahlen und Fällung bevorzugt sind. Das Vermahlen kann bevorzugt als kryogenes Vermahlen oder Kaltvermahlen ausgeführt werden. Als Polymerisationsverfahren eignen sich alle gängigen Verfahren der Polymerisation zur Herstellung von Polymeren wie kationische, anionische und radikalische Polymerisation, wobei anionische Polymerisation besonders bevorzugt ist. Geeignete Fällungsverfahren sind beispielsweise in der DE 197 47 309 A1 und EP 1 840 155 A1 dargestellt.

Die Partikel des Polymerpulvers mit einer Partikelgröße kleiner als 10,48 µm, die Partikel des Polymerpulvers mit einer Partikelgröße im Bereich von größer als oder gleich 10,48 µm bis kleiner als 30,53 µm und die Partikel des Polymerpulvers mit einer Partikelgröße größer als oder gleich 30,53 µm können aus verschiedenen Materialien oder demselben Material gebildet sein. Bevorzugt sind die Partikel des Polymerpulvers mit einer Partikelgröße kleiner als 10,48 µm, die Partikel des Polymerpulvers mit einer Partikelgröße im Bereich von größer als oder gleich 10,48 µm und kleiner als 30,53 µm und die Partikel des Polymerpulvers mit einer Partikelgröße größer als oder gleich 30,53 µm aus demselben Material gebildet, wobei das Material bevorzugt aus den oben genannten thermoplastischen Polymeren, insbesondere Polyamid 12, Polyamid 6.13 und/oder Polypropylen ausgewählt ist.

Das Polymerpulver des erfindungsgemäßen Pulvers kann weiterhin durch die D50-, D10- und/oder D90-Partikelgröße beschrieben werden. Die D50-Partikelgröße, die auch als Medianwert bezeichnet wird, gibt diejenige Partikelgröße der volumenbezogenen Partikelgrößenverteilung an, unterhalb bzw. oberhalb derer 50% aller Partikel liegen. Die D10-Partikelgröße gibt entsprechend diejenige Partikelgröße der volumenbezogenen Partikelgrößenverteilung an, unterhalb derer 10% aller Partikel liegen. Die D90-Partikelgröße gibt entsprechend diejenige Partikelgröße der volumenbezogenen Partikelgrößenverteilung an, unterhalb derer 90% aller Partikel liegen. Die hierin angegebenen D50-, D10- und D90-Partikelgrößen beziehen sich jeweils auf die mittels des weiter unten in den Beispielen beschriebenen auf Laserbeugung basierenden Verfahrens bestimmte Partikelgrößenverteilung. Das Polymerpulver der vorliegenden Erfindung kann beispielsweise eine D50-Partikelgröße von 40 µm bis 80 µm, bevorzugt von 50 µm bis 70 µm aufweisen. Die D10-Partikelgröße kann beispielsweise von 30 µm bis 45 µm und/oder die D90-Partikelgröße von 75 µm bis 120 µm betragen. Das Polymerpulver des erfindungsgemäßen Pulvers kann auch jegliche Kombination der vorstehend genannten Bereichsangaben der D50-, D10- und D90-Partikelgröße aufweisen.

Das erfindungsgemäße Pulver kann durch den Gewichtsanteil des Polymerpulvers charakterisiert werden. So kann der Anteil des Polymerpulvers bezogen auf das Gesamtgewicht des Pulvers mindestens 20 Gewichts-%, mindestens 30 Gewichts-%, mindestens 40 Gewichts-%, mindestens 50 Gewichts-%, mindestens 60 Gewichts-%, mindestens 70 Gewichts-%, mindestens 80 Gewichts-%, bevorzugt mindestens 90 Gewichts-%, weiter bevorzugt mindestens 95 Gewichts-%, noch weiter bevorzugt mindestens 99 Gewichts-%, oder mindestens 99,5 Gewichts-% betragen. Das erfindungsgemäße Pulver kann auch durch den Volumenanteil des Polymerpulvers am Pulver charakterisiert werden. So kann der Anteil des Polymerpulvers bezogen auf das Gesamtvolumen des Pulvers mindestens 70 Volumen-%, mindestens 80 Volumen-%, bevorzugt mindestens 90 Volumen-%, weiter bevorzugt mindestens 95 Volumen-% oder noch weiter bevorzugt mindestens 99 Volumen-% betragen. In einer bevorzugten Praxis der vorliegenden Erfindung besteht das erfindungsgemäße Pulver im Wesentlichen aus dem Polymerpulver. In einer ebenfalls bevorzugten Praxis der vorliegenden Erfindung besteht das erfindungsgemäße Pulver aus dem Polymerpulver.

Das erfindungsgemäße Pulver kann optional eine oder mehrere anorganische Rieselhilfen umfassen. Rieselhilfen haben typischerweise nanoskalige Abmessungen, beispielsweise von 500 nm oder weniger, oder 100 nm oder weniger oder 50 nm oder weniger und werden konventionell zur Verbesserung der Rieseleigenschaften von partikulären Zusammensetzungen eingesetzt. Sie wirken typischerweise als Trennmittel, wodurch die Tendenz zu Verklumpungen im Pulver reduziert wird. Die optional eingesetzte anorganische Rieselhilfe kann dabei aus der Gruppe der gängigen, aus dem Stand der Technik an sich bekannten Rieselhilfen ausgewählt sein. Als typische Beispiele können beispielweise Metalloxide wie etwa Siliziumdioxid, Aluminiumoxid sowie Mischungen und Kombinationen davon genannt werden. Siliziumdioxid kann dabei in der Form von Kieselsäure, pyrogener Kieselsäure, gefällter Kieselsäure, kolloidaler Kieselsäure, hydrophobierter Kieselsäure, hydrophober Kieselsäure oder Mischungen derselben vorliegen. Die hydrophobe oder hydrophobierte Kieselsäure wird vorzugsweise durch Umsetzung von Kieselsäure mit Hydrophobierungsmitteln erhalten. Die Hydrophobierung erfolgt vorzugsweise nach Fällung oder Pyrolyse der Kieselsäure und weitgehender Umsetzung freier Hydroxylgruppen der Kieselsäure mit zum Beispiel Silanen, Silazanen oder Siloxanen. Bevorzugte Hydrophobierungsmittel sind Hexadecylsilan, Dimethyldichlorsilan, Hexamethyldisilazan, Octamethylcyclotetrasiloxan, Polydimethylsiloxan und Methacrylsilane. Weitere mögliche anorganische Riesenhilfen sind etwa Glas-, Metall- und Keramikpartikel, wie zum Beispiel Glaskugeln, Stahlkugeln oder Metallgries, die etwa auch zum Erzielen bestimmter gewünschter mechanischer, elektrischer oder magnetischer Eigenschaft beigemengt werden können.

Durch die oben beschriebene Kontrolle der Volumenanteile der feinteiligen Partikel mit einer Partikelgröße kleiner als 30,53 µm im Polymerpulver kann jedoch typischerweise auf die Zugabe von anorganischen Rieselhilfen zum erfindungsgemäßen Pulver verzichtet oder diese deutlich reduziert werden. Der Anteil an anorganischer Rieselhilfe, bezogen auf das Gesamtgewicht des Pulvers, liegt typischerweise bei weniger als 0,1 Gewichts-%, weiter bevorzugt bei weniger als 0,05 Gewichts-%, besonders bevorzugt bei weniger als 0,01 Gewichts-%. Ganz besonders bevorzugt ist das erfindungsgemäße Pulver im Wesentlichen frei von anorganischer Rieselhilfe; das heißt, ein oder mehrere anorganische Rieselhilfen liegen, wenn überhaupt, nur als Verunreinigungen im Pulver vor. Noch weiter bevorzugt ist das erfindungsgemäße Pulver frei von anorganischer Rieselhilfe.

Das Pulver kann des Weiteren optional einen oder mehrere Füllstoffe umfassen. Unter einem Füllstoff werden hierin unlösliche Zusatzstoffe verstanden, die bei entsprechender Zugabemenge etwa die mechanischen, elektrischen oder Verarbeitungseigenschaften des Pulvers beziehungsweise daraus hergestellter Formkörper beeinflussen. Füllstoffe haben üblicherweise Abmessungen im Mikrometer- bis Millimeterbereich, wie beispielsweise im Bereich von 35 µm bis 2 mm, 50 µm bis 1 mm oder 75 µm bis 500 µm und unterscheiden sich mithin von Rieselhilfen. Es können alle üblicherweise eingesetzten Füllstoffe verwendet werden. Gängige Füllstoffe sind etwa Füllstoffe aus organischen oder anorganischen Materialien wie etwa organische Füllstoffe, amorphe, teilkristalline oder kristalline Füllstoffe, Metallpulver, Karbonate, Sulfate sowie natürliche oder synthetische Silikate, Oxide und Hydroxide. Als Beispiele sind etwa Metalloxide wie Magnesium-, Zink- und Kalziumoxid, Metallhydroxide wie Magnesium- und Aluminiumhydroxid, Aluminiumpulver, Bariumsulfat, Mineralfasern, pyrogenes Siliziumdioxid, Quarzmehle, Kieselsäure, Glasfasern, oder Glaskugeln zu nennen. Das erfindungsgemäße Pulver kann durch den Gewichtsanteil des Füllstoffs am Pulver charakterisiert werden. So kann der Anteil an Füllstoff bezogen auf das Gesamtgewicht des Pulvers bis zu 70 Gewichts-%, bis zu 60 Gewichts-%, bis zu 50 Gewichts-%, bis zu 40 Gewichts-% oder bis zu 30 Gewichts-% betragen. Der Anteil an Füllstoff, bezogen auf das Gesamtgewicht des Pulvers, kann beispielsweise 5 Gewichts-% oder mehr, 10 Gewichts-% oder mehr, oder 20 Gewichts-% oder mehr betragen. Der Anteil an Füllstoff kann in einem durch eine beliebige Kombination vorstehend genannter Werte aufgespannten Bereich liegen. Der Anteil an Füllstoff, bezogen auf das Gesamtgewicht des Pulvers, kann beispielweise 0 Gewichts-% bis 70 Gewichts-%, 10 Gewichts-% bis 60 Gewichts-%, oder 20 Gewichts-% bis 50 Gewichts-% betragen. In einer bevorzugten Praxis der vorliegenden Erfindung enthält das erfindungsgemäße Pulver im Wesentlichen keinen Füllstoff; das heißt, Füllstoffe liegen, wenn überhaupt, nur als Verunreinigungen im Pulver vor. Bevorzugt enthält das erfindungsgemäße Pulver keinen Füllstoff.

Das Pulver kann ferner optional organische, nichtpolymere Materialien umfassen. Als mögliche organische, nichtpolymere Materialien können etwa Lactame genannt werden.

Das Pulver kann des Weiteren optional ein oder mehrere Additive umfassen. Unter einem Additiv werden hierin Materialien verstanden, die zur weiteren Modifikation des erfindungsgemäßen Pulvers wie zum Beispiel dem Einfärben oder der Optimierung der Verarbeitungseigenschaften und/oder Eigenschaften von mit dem Pulver hergestellten Formkörper hinzugefügt werden. Als Additiv können die üblicherweise im Stand der Technik eingesetzten Additive wie zum Beispiel organische und anorganische Pigmente, Farbstoffe, Stoffe basierend auf unterkühlten Schmelzen, pH-Wert-Regler, Flammschutzmittel, Suszeptoren, Absorber, Stabilisatoren, Prozesshilfsmittel oder Mischungen und Kombinationen derselben verwendet werden. Exemplarische Pigmente stellen etwa Titandioxid, Ferrite, Zirkoniumdioxid, und Ruße dar. Als Stabilisatoren eignen sich etwa Phenole, insbesondere sterisch gehinderte Phenole. Absorber werden beispielsweise eingesetzt, um das Pulver mittels Bestrahlung mit elektromagnetischer Energie aufzuschmelzen. Gängige Absorber sind etwa in der DE 10 2004 012 683 A1 beschrieben und können insbesondere aus Ruß, Kupferhydroxidphosphat, Kreide, Knochenkohle, Kohlenstofffasern, Graphit und Interferenzpigmenten ausgewählt sein. Es kann ein Additiv oder eine Mischung mehrerer Additive in dem erfindungsgemäßen Pulver enthalten sein. Das jeweilige Additiv wird jeweils in für den gewünschten Einsatzzweck geeigneter Menge eingesetzt. Gängige Einsatzmengen sind dem Fachmann bekannt. Die Menge an Additiv, bezogen auf das Gesamtgewicht des Pulvers, kann beispielsweise bis zu 10 Gewichts-%, bis zu 6 Gewichts-%, bis zu 3 Gewichts-%, bis zu 2 Gewichts-%, bis zu 1 Gewichts-%, bis zu 0,5 Gewichts-%, bis zu 0,25 Gewichts-%, bis zu 0,2 Gewichts-%, bis zu 0,1 Gewichts-%, oder bis zu 0,05 Gewichts-% betragen. In einer bevorzugten Praxis der vorliegenden Erfindung enthält das erfindungsgemäße Pulver im Wesentlichen kein Additiv; das heißt, Additive liegen, wenn überhaupt, nur als Verunreinigungen im Pulver vor. In einer weiteren bevorzugten Praxis der vorliegenden Erfindung enthält das erfindungsgemäße Pulver kein Additiv.

Die Rieseleigenschaften des erfindungsgemäßen Pulvers lassen sich unter anderem durch die Messung der Fließfähigkeit beschreiben. Dies ist zum Beispiel möglich mit dem "Revolution Powder Analyzer" der Firma Mercury Scientific Inc. nach dem in den Beispielen beschriebenen Verfahren. Dabei werden die Parameter "Avalange Angle" und "absolute Break Energy" erhalten, die ein Maß für die Fließfähigkeit des Pulvers sind. Dabei zeigen höhere Werte für den "Avalange Angle" und die "absolute Break Energy" eine schlechtere Fließfähigkeit an. Das erfindungsgemäße Pulver kann insbesondere einen "Avalange Angle" kleiner als 50°, bevorzugt kleiner als 45° und besonders bevorzugt kleiner als 40° aufweisen. Bevorzugt weist das Pulver einen "Avalange Angle" von 20° bis 50°, bevorzugter von 30° bis 40° auf. Das erfindungsgemäße Pulver kann weiterhin durch die "absolute Break Energy" charakterisiert werden. Das Pulver kann beispielsweise eine "absolute Break Energy" von kleiner als 300 kJ/kg, bevorzugt kleiner als 290 kJ/kg, besonders bevorzugt kleiner als 280 kJ/kg aufweisen. Beispielsweise kann das Pulver eine "absolute Break Energy" von 230 kJ/kg bis 300 kJ/kg, bevorzugt 240 kJ/kg bis 290 kJ/kg, insbesondere 250 kJ/kg bis 280 kJ/kg, besonders bevorzugt 260 kJ/kg bis 275 kJ/kg aufweisen.

Das erfindungsgemäße Pulver kann weiterhin durch die Breite des Prozessfensters in Kelvin in einem PBF-Verfahren gekennzeichnet werden. Die hierin gemachten Angaben zum Prozessfenster beziehen sich auf das selektive Lasersinter-Verfahren, wie es in den Beispielen beschrieben ist. Das Prozessfenster eines Pulvers ist als die Differenz zwischen der unteren, minimal notwendigen Prozesstemperatur und der oberen, maximal möglichen Prozesstemperatur definiert. Die minimal notwendige Prozesstemperatur ist die Temperatur, bei der kein Curl-Effekt mehr auftritt, der den Bauprozess zum Abbruch bringen kann. Die maximal mögliche Prozesstemperatur ist die Temperatur, bei der die Pulverpartikel im Pulver anfangen zu versintern. Beispielweise kann das erfindungsgemäße Pulver ein Prozessfenster im selektiven Lasersinter-Verfahren von mindestens 2 K, bevorzugt mindestens 3 K, weiter bevorzugt mindestens 4 K, besonders bevorzugt mindestens 5 K aufweisen. Beispielsweise kann das erfindungsgemäße Pulver ein Prozessfenster in dem PBF-Verfahren von 2 K bis 15 K, bevorzugt 3 K bis 12 K auf, besonders bevorzugt 4 K bis 10K aufweisen.

Die vorliegende Erfindung betrifft auch ein Verfahren zur Herstellung des vorstehend beschriebenen Pulvers, wobei das Polymerpulver durch zumindest ein Kombinieren von mindestens einem ersten Pulver umfassend polymerhaltige Partikel und einem zweiten Pulver umfassend polymerhaltige Partikel bereitgestellt wird. Das erste Pulver und das zweite Pulver können dabei unabhängig voneinander ein oder mehrere Materialien, wie sie hierin oben für das Polymerpulver beschrieben sind, enthalten oder daraus bestehen. So können die polymerhaltigen Partikel des ersten Pulvers und/oder die polymerhaltigen Partikel des zweiten Pulvers unabhängig voneinander mindestens ein thermoplastisches Polymer enthalten, wobei das mindestens eine thermoplastische Polymer bevorzugt aus den oben genannten thermoplastischen Polymeren ausgewählt ist. In einer besonders bevorzugten Praxis der vorliegenden Erfindung bestehen die Partikel des ersten Pulvers und die Partikel des zweiten Pulvers im Wesentlichen aus demselben Material. Die Partikel des ersten Pulvers und/oder des zweiten Pulvers können mit den oben beschriebenen Verfahren für die Herstellung der Partikel des Polymerpulvers hergestellt werden, wobei kryogenes Vermahlen, Kaltvermahlen sowie Fällung gemäß der EP 1 840 155 A1 oder DE 197 47 309 A1 bevorzugt sind.

Das erste Pulver und das zweite Pulver sind dabei so beschaffen und/oder werden in einem Mengenverhältnis so kombiniert, dass das resultierende Polymerpulver einen Volumenanteil von 0,5% bis 15% an Partikeln mit einer Partikelgröße kleiner als 10,48 µm und einen Volumenanteil von nicht mehr als 4,0% an Partikeln mit einer Partikelgröße im Bereich von größer als oder gleich 10,48 µm und kleiner als 30,53 µm aufweist.

In einer speziellen Variante des erfindungsgemäßen Verfahrens weist das erste Pulver im Wesentlichen nur Partikel mit einer Partikelgröße größer als oder gleich 30,53 µm auf. Das zweite Pulver kann im Wesentlichen nur Partikel mit einer Partikelgröße kleiner als 10,48 µm aufweisen. Dabei ist der Anteil an Partikeln mit einer Partikelgröße im Bereich von größer als oder gleich 10,48 µm bis kleiner als 30,53 µm im ersten Pulver und im zweiten Pulver zusammen genommen derart gering, dass das erhaltene Polymerpulver nach dem Kombinieren des ersten Pulvers und des zweiten Pulvers einen Volumenanteil von nicht mehr als 4,0 % an diesen Partikeln aufweist. Das Mischungsverhältnis des ersten Pulvers und des zweiten Pulvers wird dabei so gewählt, dass das erhaltene Polymerpulver einen Volumenanteil von 0,5% bis 15% an Partikeln mit einer Partikelgröße kleiner als 10,48 µm aufweist. In diesem Zusammenhang bedeutet "im Wesentlichen eine bestimmte Partikelgröße aufweisend", dass das erste Pulver bzw. das zweite Pulver in ganz überwiegendem Maße Partikel der benannten Partikelgröße aufweist und Partikel abweichender Partikelgröße allenfalls in geringen Mengen, wie etwa einem Volumenanteil von weniger als 5%, weniger als 2%, weniger als 1% oder weniger als 0,5%, vorliegen. Die Partikel abweichender Partikelgröße werden im Allgemeinen nicht absichtlich zugesetzt, sondern stammen, wenn vorhanden, zum Beispiel aus unvollständigem Abtrennen oder Verunreinigungen. Die Partikel mit abweichender Partikelgröße sind üblicherweise in so geringen Mengen vorhanden, dass sie die Eigenschaften der betreffenden Komponente nicht merklich beeinflussen. Insbesondere ist hierunter zu verstehen, dass das im Wesentlichen nur Partikel mit einer Partikelgröße größer als oder gleich 30,53 µm aufweisende erste Pulver einen Volumenanteil von Partikeln mit einer Partikelgröße kleiner als 30,53 µm von weniger als 5%, bevorzugt weniger als 2%, insbesondere weniger als 1%, besonders bevorzugt weniger als 0,5% aufweist. Das im Wesentlichen nur Partikel mit einer Partikelgröße kleiner als 10,48 µm aufweisende zweite Pulver kann insbesondere einen Volumenanteil von Partikeln gleich oder größer als 10,48 µm von weniger als 5%, bevorzugt weniger als 2%, insbesondere weniger als 1%, besonders bevorzugt weniger als 0,5% aufweisen.

Das erste Pulver und/oder das zweite Pulver können jeweils durch einen oder mehrere Sichtschritte erhalten werden. So kann das erste Pulver das Grobgut umfassen, welches durch Sichten eines ersten Primärpulvers bei 30,53 µm erhalten wird. Das erste Primärpulver weist dabei bevorzugt eine D50-Partikelgröße von 40 µm bis 120 µm, besonders bevorzugt 40 µm bis 90 µm auf. Das zweite Pulver kann das Feingut umfassen, das durch Sichten eines zweiten Primärpulvers bei 10,48 µm erhalten wird. Das zweite Primärpulver weist dabei bevorzugt eine D50-Partikelgröße von 1 µm bis 20 µm auf. Das erste Primärpulver und das zweite Primärpulver können aus Partikeln aus denselben oder unterschiedlichen Materialien bestehen. Durch Kombinieren des ersten Pulvers und des zweiten Pulvers wird das Polymerpulver des erfindungsgemäßen Pulvers erhalten, das die entsprechenden Volumenanteile an Partikeln mit einer Partikelgröße kleiner als 10,48 µm und Partikeln mit einer Partikelgröße im Bereich von größer als oder gleich 10,48 µm bis kleiner als 30,53 µm enthält.

Alternativ können das erste Pulver und das zweite Pulver erhalten werden durch (1) ein erstes Sichten eines Primärpulvers bei 30,53 µm, wobei das erhaltene Grobgut des ersten Sichtens das erste Pulver bildet; und (2) ein zweites Sichten des Feinguts des ersten Sichtens bei 10,48 µm, wobei das erhaltene Feingut des zweiten Sichtens das zweite Pulver bildet. Bevorzugt weist das Primärpulver eine D50-Partikelgröße von 40 µm bis 120 µm, weiter bevorzugt von 40 µm bis 90 µm auf. Durch Kombinieren des ersten Pulvers und des zweiten Pulvers wird so ebenfalls das Polymerpulver des erfindungsgemäßen Pulvers erhalten, dass die erfindungsgemäßen, vorstehend beschriebenen Volumenanteile an Partikeln mit einer Partikelgröße kleiner als 10,48 µm und an Partikeln mit einer Partikelgröße im Bereich größer als oder gleich 10,48 µm bis kleiner als 30,53 µm aufweist. In dieser Verfahrensvariante sind die Partikel des so erhaltenen, erfindungsgemäßen Pulvers im Wesentlichen einheitlich aus demselben Material gebildet.

Die Partikel der Primärpulver können mit den oben beschriebenen Verfahren für die Herstellung der Partikel des Polymerpulvers hergestellt werden, wobei kryogenes Vermahlen, Kaltvermahlen sowie Fällung gemäß der EP 1 840 155 A1 oder DE 197 47 309 A1 bevorzugt sind. Die Materialien, aus denen die Partikel der Primärpulver gebildet sind, können dabei insbesondere die oben für das erste und zweite Pulver sowie für das Polymerpulver beschriebenen Materialien umfassen oder daraus bestehen.

Sichten kann mit den dafür üblicherweise angewendeten Techniken durchgeführt werden. In einer besonders bevorzugten Praxis der vorliegenden Erfindung wird Sichten mittels Hydroklassieren, Aeroklassieren, Fliehkraftsichten, Zickzacksichten, oder Tonersichten durchgeführt, wobei Tonersichten ganz besonders bevorzugt ist. Ein besonders geeignetes Gerät für das Pulversichten ist beispielsweise der TSP 100 der Hosokawa Alpine AG, Augsburg, Deutschland. Sichten kann etwa nach dem unten in den Beispielen beschriebenen Verfahren durchgeführt werden. Für das Sichten eines Pulvers können auch zwei oder mehr Sichttechniken sequenziell oder eine Sichttechnik mehrfach angewendet werden. Beispielsweise kann das Sichten der Primärpulver mit derselben Sichttechnik beziehungsweise derselben Kombination von Sichttechniken oder unterschiedlichen Sichttechniken beziehungsweise unterschiedlichen Kombinationen von Sichttechniken durchgeführt werden.

Das erfindungsgemäße Verfahren umfasst in einer bevorzugten Praxis der vorliegenden Erfindung ein Mischen des ersten Pulvers und des zweiten Pulvers. Das Mischen kann mit den üblicherweise verwendeten Methoden und Gerätschaften ausgeführt werden. In einer besonders bevorzugten Praxis der vorliegenden Erfindung wird das Mischen mit einem Vertikal-Schnellmischer durchgeführt. Ein geeignetes Mischgerät ist auch das Modell M20 S-FU der Firma MTI, Detmold Deutschland. Die Mischbedingungen werden dabei vorteilhafterweise so angepasst, dass eine homogene Mischung erzielt wird. Im genannten Mischgerät kann eine homogene Mischung beispielweise durch dreiminütiges Mischen bei 1500 U/min erzeugt werden.

Das erfindungsgemäße Verfahren kann weiterhin einen Schritt des Vorlegens oder Hinzufügens zum Polymerpulver mindestens einer anorganischen Rieselhilfe umfassen, wobei die mindestens eine anorganische Rieselhilfe bevorzugt mit dem Polymerpulver homogen vermischt wird. Dafür können übliche etwa oben beschriebene Mischtechniken verwendet werden.

Das erfindungsgemäße Verfahren kann ferner einen Schritt des Vorlegens oder Hinzufügens zum Polymerpulver mindestens eines Füllstoffs und/oder mindestens eines Additivs, wie oben beschrieben, umfassen. Der mindestens eine Füllstoff und/oder das mindestens eine Additiv wird bevorzugt mit dem Polymerpulver homogen vermischt wird. Dafür können übliche etwa oben beschriebene Mischtechniken verwendet werden.

Wirtschaftlich besonders sinnvoll verwerten lässt sich das erfindungsgemäße Pulver durch die Verwendung in einem PBF-Verfahren und bei einem solchermaßen hergestellten Formkörper. Dementsprechend betrifft die vorliegende Erfindung auch ein Pulverbett insbesondere zu Verwendung in einer Fusionszone eines Powder-Bed-Fusion-Verfahrens, wobei das Pulverbett das vorstehend beschriebene, erfindungsgemäße Pulver umfasst, wobei das Pulver bevorzugt nach dem vorstehend beschriebenen Verfahren hergestellt ist. In einer bevorzugten Praxis der vorliegenden Erfindung besteht das Pulverbett aus dem erfindungsgemäßen Pulver oder das Pulverbett ist im Wesentlichen aus dem erfindungsgemäßen Polymerpulver gebildet; das heißt, es liegen im Wesentlichen keine weiteren Bestandteile neben dem erfindungsgemäßen Pulver im Pulverbett vor. Weitere Bestandteile im Pulverbett resultieren in letzterem Fall, wenn überhaupt, aus Verunreinigungen.

Gegenstand der vorliegenden Erfindung ist somit auch die Verwendung eines erfindungsgemäßen Pulvers oder Pulverbetts in einem Powder-Bed-Fusion-Verfahren.

Die Erfindung betrifft auch einen Formköper hergestellt mittels eines Powder-Bed-Fusion-Verfahrens unter Verwendung des erfindungsgemäßen Pulvers beziehungsweise Pulverbetts. Anwendungsgebiete für erfindungsgemäße Formkörper sind sowohl im Rapid Prototyping als auch im Rapid Manufacturing zu sehen. Mit letzterem sind insbesondere Kleinserien gemeint, also die Herstellung von mehr als einem gleichen Teil, bei dem aber die Produktion mittels eines Spritzgießwerkzeugs oder Ähnlichem nicht wirtschaftlich ist, vor Allem, wenn die Teile eine sehr komplexe Gestaltung aufweisen. Beispiele hierfür sind Teile für hochwertige Personen- und Lastkraftwagen, Renn- oder Rallyefahrzeuge, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Formteile gehen, können die Luft- und Raumfahrtindustrie sein, die Medizintechnik, der Maschinenbau, der Automobilbau, die Sportindustrie, die Haushaltswarenindustrie, die Elektroindustrie und der Lifestyle-Sektor.

Die vorliegende Erfindung richtet sich mithin insbesondere auf folgende Aspekte:
1. Pulver insbesondere zur Verwendung in einem Powder-Bed-Fusion-Verfahren, umfassend ein Polymerpulver, wobei das Polymerpulver einen Volumenanteil von 0,5% bis 15% an Partikeln mit einer Partikelgröße kleiner als 10,48 µm und einen Volumenanteil von nicht mehr als 4,0% an Partikeln mit einer Partikelgröße im Bereich von größer als oder gleich 10,48 µm bis kleiner als 30,53 µm aufweist, wobei die Volumenanteile und die Partikelgrößen mittels dem in der Beschreibung dargestellten Laserbeugungsverfahren bestimmt werden.
2. Pulver gemäß Aspekt 1, dadurch gekennzeichnet, dass das Pulver im Wesentlichen frei von anorganischer Rieselhilfe ist oder das Pulver mindestens eine anorganische Rieselhilfe umfasst, wobei der Anteil der mindestens einen anorganischen Rieselhilfe bezogen auf das Gesamtgewicht des Pulvers bevorzugt weniger als 0,1 Gewichts-%, weiter bevorzugt weniger als 0,05 Gewichts-%, besonders bevorzugt weniger als 0,01 Gewichts-% beträgt.
3. Pulver gemäß Aspekt 2, dadurch gekennzeichnet, dass die mindestens eine anorganische Rieselhilfe ausgewählt ist aus Siliziumdioxid und Aluminiumoxid sowie Mischungen und Kombinationen davon.
4. Pulver gemäß irgendeinem der vorstehenden Aspekte, dadurch gekennzeichnet, dass der Anteil des Polymerpulvers bezogen auf das Gesamtgewicht des Pulvers mindestens 30 Gewichts-%, mindestens 50 Gewichts-%, bevorzugt mindestens 70 Gewichts-%, weiter bevorzugt mindestens 90 Gewichts-% oder noch weiter bevorzugt mindestens 95 Gewichts-% beträgt.
5. Pulver gemäß irgendeinem der vorstehenden Aspekte, dadurch gekennzeichnet, dass das Pulver einen Avalange Angle kleiner als 50°, bevorzugt kleiner als 45°, besonders bevorzugt kleiner als 40° aufweist, wobei der Avalange Angle gemäß dem hierin beschriebenen Verfahren bestimmt wird.
6. Pulver gemäß irgendeinem der vorstehenden Aspekte, dadurch gekennzeichnet, dass das Pulver eine absolute Break Energy kleiner als 300 kJ/kg, bevorzugt kleiner als 290 kJ/kg, besonders bevorzugt kleiner als 280 kJ/kg aufweist, wobei die absolute Break Energy gemäß dem hierin beschriebenen Verfahren bestimmt wird.
7. Pulver gemäß irgendeinem der vorstehenden Aspekte, dadurch gekennzeichnet, dass das Pulver ein Prozessfenster in dem Powder-Bed-Fusion-Verfahren von mindestens 2 K, bevorzugt mindestens 3 K, besonders bevorzugt mindestens 5 K aufweist, wobei das Powder-Bed-Fusion-Verfahren nach dem in der Beschreibung dargestellten Lasersinter-Verfahren durchgeführt wird.
8. Pulver gemäß irgendeinem der vorstehenden Aspekte, dadurch gekennzeichnet, dass das Polymerpulver einen Volumenanteil von mindestens 1,0%, bevorzugt mindestens 1,5%, besonders bevorzugt mindestens 2,0% an Partikeln mit einer Partikelgröße kleiner als 10,48 µm aufweist.
9. Pulver gemäß irgendeinem der vorstehenden Aspekte, dadurch gekennzeichnet, dass das Polymerpulver einen Volumenanteil von nicht mehr als 3,0%, bevorzugt nicht mehr als 2,0%, besonders bevorzugt nicht mehr als 1,6% an Partikeln mit einer Partikelgröße im Bereich von größer als oder gleich 10,48 µm bis kleiner als 30,53 µm aufweist.
10. Pulver gemäß irgendeinem der vorstehenden Aspekte, dadurch gekennzeichnet, dass das Polymerpulver einen Volumenanteil von maximal 12%, bevorzugt maximal 10%, weiter bevorzugt maximal 8,0%, besonders bevorzugt maximal 6,0% an Partikeln mit einer Partikelgröße kleiner als 10,48 µm aufweist.
11. Pulver gemäß irgendeinem der vorstehenden Aspekte, dadurch gekennzeichnet, dass die Partikel des Polymerpulvers mit einer Partikelgröße kleiner als 10,48 µm, die Partikel des Polymerpulvers mit einer Partikelgröße im Bereich von größer als oder gleich 10,48 µm bis kleiner als 30,53 µm und/oder die Partikel des Polymerpulvers mit einer Partikelgröße größer als oder gleich 30,53 µm durch Vermahlen, Fällung, Polymerisation, Schneiden von Fasern oder Compoundieren einer Polymerschmelze in einem nicht homogen mischbaren Stoff hergestellt werden, wobei Vermahlen und Fällung bevorzugt sind.
12. Pulver gemäß irgendeinem der vorstehenden Aspekte, dadurch gekennzeichnet, dass das Polymerpulver Partikel umfasst, die aus einem Material gebildet sind, das mindestens ein thermoplastisches Polymer umfasst, wobei das mindestens eine thermoplastische Polymer bevorzugt ausgewählt ist aus der Gruppe bestehend aus Polyolefinen, Polyethylen, Polypropylen, Polyvinylchlorid, Polystyrol, Polycarbonaten, Polyoxymethylen, Polyimiden, Polysulfonen, Poly-(N-methylmethacrylimide), Polycarbonat (PC)-Acrylnitril-Butadien-Styrol (ABS), lonomeren, Polymethylmethacrylat, Polyvinylidenflouriden, Polyetherketonen, Polyaryletherketonen, Polyamiden sowie Copolymeren, Mischungen und Kombinationen davon, wobei das mindestens eine thermoplastische Polymer besonders bevorzugt ein Homopolyamid, ein Copolyamid oder eine Mischung aus Homo- und Copolyamid umfasst.
13. Pulver gemäß irgendeinem der vorstehenden Aspekte, dadurch gekennzeichnet, dass die Partikel des Polymerpulvers mit einer Partikelgröße kleiner als 10,48 µm, die Partikel des Polymerpulvers mit einer Partikelgröße im Bereich von größer als oder gleich 10,48 µm und kleiner als 30,53 µm und die Partikel des Polymerpulvers mit einer Partikelgröße größer als oder gleich 30,53 µm aus demselben Material gebildet sind, wobei das Material bevorzugt aus den in Aspekt 12 genannten Materialien ausgewählt ist.
14. Pulver gemäß irgendeinem der vorstehenden Aspekte, dadurch gekennzeichnet, dass das Polymerpulver eine D50-Partikelgröße von 50 µm bis 70 µm, eine D10-Partikelgröße von 30 bis 45 µm und/oder eine D90-Partikelgröße von 75 bis 120 µm aufweist.
15. Verfahren zur Herstellung eines Pulvers gemäß irgendeinem der Aspekte 1 bis 14, wobei das Polymerpulver durch zumindest ein Kombinieren von mindestens einem ersten Pulver umfassend polymerhaltige Partikel und einem zweiten Pulver umfassend polymerhaltige Partikel bereitgestellt wird.
16. Verfahren gemäß Aspekt 15, dadurch gekennzeichnet, dass das erste Pulver im Wesentlichen keine Partikel mit einer Partikelgröße kleiner als 30,53 µm aufweist und/oder das zweite Pulver im Wesentlichen nur Partikel mit einer Partikelgröße kleiner als 10,48 µm aufweist.
17. Verfahren gemäß einem der Aspekte 15 oder 16, dadurch gekennzeichnet, dass mindestens das erste Pulver und das zweite Pulver miteinander vermischt werden, wobei das Mischen bevorzugt mit einem Vertikal-Schnellmischer durchgeführt wird.
18. Verfahren gemäß irgendeinem der Aspekte 15 bis 17, dadurch gekennzeichnet, dass die polymerhaltigen Partikel des ersten Pulvers und/oder die polymerhaltigen Partikel des zweiten Pulvers unabhängig voneinander mindestens ein thermoplastisches Polymer enthalten, wobei das mindestens eine thermoplastische Polymer bevorzugt aus den in Aspekt 12 genannten thermoplastischen Polymeren ausgewählt ist.
19. Verfahren gemäß irgendeinem der Aspekte 15 bis 18, dadurch gekennzeichnet, dass die Partikel des ersten Pulvers und die Partikel des zweiten Pulvers im Wesentlichen aus demselben Material gebildet sind.
20. Verfahren gemäß irgendeinem der Aspekte 15 bis 19, dadurch gekennzeichnet, dass das erste Pulver und/oder das zweite Pulver durch einen oder mehrere Sichtschritte erhalten werden.
21. Verfahren gemäß irgendeinem der Aspekte 15 bis 20, dadurch gekennzeichnet, dass das erste Pulver das Grobgut umfasst, das durch Sichten eines ersten Primärpulvers bei 30,53 µm erhalten wird, wobei das erste Primärpulver bevorzugt eine D50-Partikelgröße von 40 µm bis 120 µm, weiter bevorzugt von 40 µm bis 90 µm aufweist.
22. Verfahren gemäß irgendeinem der Aspekte 15 bis 21, dadurch gekennzeichnet, dass das zweite Pulver das Feingut umfasst, das durch Sichten eines zweiten Primärpulvers bei 10,48 µm erhalten wird, wobei das zweite Primärpulver bevorzugt eine D50-Partikelgröße von 1 µm bis 20 µm aufweist.
23. Verfahren gemäß irgendeinem der Aspekte 15 bis 20, dadurch gekennzeichnet, dass das erste Pulver und das zweite Pulver erhalten werden durch
   - ein erstes Sichten eines ersten Primärpulvers bei 30,53 µm, wobei das erhaltene Grobgut des ersten Sichtens das erste Pulver bildet, und wobei das erste Primärpulver bevorzugt eine D50-Partikelgröße von 40 µm bis 120 µm, weiter bevorzugt von 40 µm bis 90 µm aufweist; und
   - ein zweites Sichten eines zweiten Primärpulvers bei 10,48 µm, wobei das erhaltene Feingut des zweiten Sichtens das zweite Pulver bildet, und wobei das zweite Primärpulver bevorzugt eine D50-Partikelgröße von 1 µm bis 20 µm aufweist.
24. Verfahren gemäß irgendeinem der Aspekte 15 bis 20, dadurch gekennzeichnet, dass das erste Pulver und das zweite Pulver erhalten werden durch
   - ein erstes Sichten eines Primärpulvers bei 30,53 µm, wobei das erhaltene Grobgut des ersten Sichtens das erste Pulver bildet; und
   - ein zweites Sichten des Feinguts des ersten Sichtens bei 10,48 µm, wobei das erhaltene Feingut des zweiten Sichtens das zweite Pulver bildet;
   wobei das Primärpulver bevorzugt eine D50-Partikelgröße von 40 µm bis 120 µm, bevorzugt 40 µm bis 90 µm, aufweist.
25. Verfahren gemäß irgendeinem der Aspekte 15 bis 24, dadurch gekennzeichnet, dass das Sichten mittels Hydroklassieren, Aeroklassieren, Fliehkraftsichten, Zickzacksichten, Tonersichten oder einer Kombination davon durchgeführt wird.
26. Verfahren gemäß irgendeinem der Aspekte 15 bis 25, dadurch gekennzeichnet, dass das Verfahren einen Schritt des Vorlegens oder Hinzufügens zum Polymerpulver mindestens einer anorganischen Rieselhilfe umfasst, wobei die mindestens eine anorganische Rieselhilfe bevorzugt mit dem Polymerpulver homogen vermischt wird.
27. Pulverbett umfassend ein Pulver gemäß irgendeinem der Aspekte 1 bis 14, wobei das Pulver bevorzugt nach einem Verfahren gemäß irgendeinem der Aspekte 15 bis 26 hergestellt ist, insbesondere zur Verwendung in einer Fusionszone eines Powder-Bed-Fusion-Verfahrens.
28. Formkörper hergestellt mittels eines Powder-Bed-Fusion-Verfahrens unter Verwendung eines Pulverbetts nach Aspekt 27.
29. Verwendung eines Pulvers nach irgendeinem der Aspekte 1 bis 14 oder eines Pulverbetts nach Aspekt 27 in einem Powder-Bed-Fusion-Verfahren, wobei das Pulver bevorzugt nach dem Verfahren gemäß irgendeinem der Aspekte 15 bis 26 hergestellt ist.

Die folgenden Beispiele sollen das Verfahren zur Herstellung des erfindungsgemäßen Pulvers sowie dessen Verwendung beschreiben, ohne die Erfindung auf die Beispiele einzuschränken.

### BEISPIELE

Alle Mengenangaben in den Beispielen beziehen sich auf Gewichtsteile, sofern nicht anders angegeben.

### Partikelgrößenbestimmung:

Die Partikelgröße und -verteilung wird mittels Laserbeugung unter Verwendung eines Malvern Mastersizer 3000, Malvern Panalytical GmbH, Kassel, Deutschland, mit der Typnummer MAL1176618 und der Softwareversion 3.63.1709.120 gemessen. Das Gerät umfasst ein Nassmodul des Typs MAL1 169873. Die optische Anordnung des Geräts umfasst eine rote He-Ne-Lichtquelle mit einer Wellenlänge von 632,8 nm sowie eine blaue LED-Lichtquelle mit einer Wellenlänge von 470 nm. Der optische Aufbau umfasst eine inverse Fourier-Anordnung von Linsen (konvergenter Strahlengang). Die effektive Brennweite beträgt 300 mm. Der Detektor umfasst Kanäle in logarithmischem Abstand mit einem Winkelbereich von 0,015 bis 144 Grad.

Die Qualifikation des Instruments und die Versuche werden gemäß der ISO 13320:2020 durchgeführt, wobei die Messungen als "off-line-Messung" und als Nassmessung durchgeführt werden. Als Messmedium wird entgastes, deionisiertes Wasser eingesetzt, welches in der Dispergiereinheit Hydro LV des Mastersizers 3000 vorgelegt wird (ca. 600 mL). Das Messmedium hat Raumtemperatur. Es wird eine automatisierte Messung des Hintergrunds am vorgelegten Messmedium unmittelbar vor Zugabe der hiernach beschriebenen Vordispersion durchgeführt. Die Messdauer beträgt dabei jeweils 10 s für die rote und die blaue Lichtquelle.

Zur Messung einer Pulverprobe in einem wässrigen Medium, ist es erforderlich die Probe ausreichend stabil zu dispergieren. Hierfür wird am Messtag zunächst eine Vordispersion des Pulvers frisch angesetzt. Dazu werden 2-3 Mikrospatel einer Pulverprobe in ein 50 mL Becherglas gegeben. Dabei muss sichergestellt sein, dass das zu messende Pulver bei der Probenentnahme homogen ist. Dies kann beispielsweise durch mehrmaliges Schwenken der Probe im gelieferten Gebinde erreicht werden. Anschließend werden 20 mL einer Tensidlösung bestehend aus entgastem deionisiertem Wasser, 1,8 Gewichts-% Polyoxyethylen-80-sorbitanmonooleat sowie 0,15 Gewichts-% ethoxyliertem Acetylen-Tensid (SURFYNOL^{®} 485 W, Evonik, Essen, Deutschland) hinzugegeben. Die Tensidlösung hat dabei ebenfalls Raumtemperatur. Diese Mischung wird anschließend mindestens 15 min auf einer Laborschüttelplatte (Typ KS500, IKA-Labortechnik, Staufen im Breisgau, Deutschland) bei 250 U/min intensiv dispergiert, sodass eine Dispersion der Partikel erreicht wird.

Aus dem Becherglas mit der bewegten Vordispersion wird eine Menge der jeweilig zu messenden Pulverdispersion mit einer Plastik-Einwegpipette entnommen und manuell zügig in das beschriebene Messmedium in der Dispergiereinheit Hydro LV des Mastersizers 3000 gegeben. Dies wird so lange wiederholt, bis eine ausreichende Abschattung beider Lichtquellen (rot und blau) von 7% bis 15% erreicht wird. Schaumbildung ist hierbei unbedingt zu vermeiden. Vor Beginn der Messung wird die Probe im Messmedium bei 100% Ultraschallleistung-Leistung (entsprechend 40 W, Frequenz 40 kHz nominell) und einer Rührgeschwindigkeit von 2500 U/min für 60 s mit Entgasen dispergiert. Danach wird der Ultraschallgeber abgestellt und die Messung der Probe ohne Verzögerung durchgeführt, wobei die Probe mittels des bei 2500 U/min laufenden Rührers durch die Messzelle bewegt wird. Die Messung der Probe umfasst zwei Messungen für je 10 s mit der roten Lichtquelle sowie zwei Messungen für je 10 s mit der blauen Lichtquelle. Es wird der Mittelwert der jeweiligen Messungen zur Auswertung genutzt. Folgende Parameter werden in der Software eingestellt: Partikelart: nicht-kugelförmig; Trockenpulvermodus; Brechungsindex 1,520; Absorptionsindex: 0,100; Partikeldichte: 1,00 g/cm³; Dispergiermedium: Wasser (Brechungsindex 1,330). Die Datenauswertung erfolgt über Anwendung der Fraunhofer-Näherung (Softwareeinstellungen: Analysenmodell: Universal, Fraunhofer, Volumen). Die Fraunhofer-Näherung ist beispielsweise im Anhang A der ISO 13320:2020 näher erläutert. Die Auswertung erfolgt automatisiert mit den eingestellten Parametern durch die geräteeigene, oben spezifizierte Software. Die Angabe der erhaltenen D50-, D10-, und D90-Partikelgrößen beziehen sich auf die Volumenverteilung.

### Bestimmung der Fließfähigkeit:

Zur analytischen Beurteilung der Fließfähigkeit wird der "Revolution Powder Analyzer" (Rev 2007, Software: Revolution Version 5.0) der Firma Mercury Scientific Inc., Newtown, USA. genutzt. Der "Revolution Powder Analyzer" weist einen rotierenden Zylinder auf, in den das zu untersuchende Pulver eingefüllt wird. Die Stirnseiten des Zylinders sind durchsichtig und eine digitale Kamera zeichnet das Verhalten des Pulvers während der Rotation auf. Mittels der geräteeigenen Software werden diese Aufzeichnungen ausgewertet. Die dabei erhaltenen Werte für den "Avalange Angle" und die "absolute Break Energy" sind ein Maß für das Fließverhalten des Pulvers. Ein höherer "Avalange Angle" und eine höhere "absolute Break Energy" zeigen eine schlechtere Fließfähigkeit an. Vor der Messung werden alle Pulver bei 70°C für 16 Stunden im Vakuum getrocknet.

Bei der Messung im "Revolution Powder Analyzer" wird als Methode "Flowability" mit folgenden Parametern gewählt: Messtrommel Durchmesser 100mm, gefüllt mit 100cm³ locker geschüttetem Pulver; Rotation Rate 0,6 rpm; Imaging Rate: 10 fps; Prep Time: 60 sec; Avalanche Threshold: 0,65%; Stop Test after 150 Avalanches; Camera settings shutter speed: 7 ms; Gain: 8 db; Image Analysis: 150 Threshold; Tail correction: on; Edge Pixels: 30.

### Sichtung von Pulvern:

Sichtung von Pulvern wurde mit einem Tonersichter TSP 100 der Hosokawa Alpine AG, Augsburg, Deutschland durchgeführt. Als Spülgas wurde dabei Stickstoff verwendet. Die Temperatur des Spülgases betrug 26°C. Für Sichtungen bei 30,53 µm wurde eine Drehzahl des Sichterrads von 2000 U/min und eine Dosierung von 10 kg/Stunde gewählt. Das Gebläse wurde mit 125 m³/Stunde betrieben. Für Sichtungen bei 10,48 µm betrug die Drehzahl des Sichterrads 1750 U/min und es wurde eine Dosierung von 10 kg/Stunde gewählt. Das Gebläse wurde in diesem Fall mit 105 m³/Stunde betrieben.

### Beurteilung im selektiven Lasersinterverfahren:

Neben der analytischen Beurteilung erfolgt auch eine Beurteilung im selektiven Lasersinterverfahren. Die Pulver der Beispiele werden dazu im Pulverbett einer EOSINT P396 (PSW 3.8) der Firma Electro Optical Systems, München, Deutschland verarbeitet. Es wurden Zugstäbe vom Typ 1B DIN EN ISO 527-1:2019-12 hergestellt. Zur Herstellung der Zugstäbe werden die Mechanik-Parameter, eine Schichtstärke von 0,15 mm und die rote Klingenkassete genutzt. Als Prozesstemperatur wird jeweils eine Temperatur genutzt, die 1 K unter der Temperatur liegt, bei dem das Pulver anfängt zu versintern. Als Entnahmekammertemperatur wird eine Temperatur eingestellt, die 40 K unter der Prozesstemperatur liegt. Es werden 9 mm Leerschichten gebaut, bevor mit der Belichtung der Zugstäbe begonnen wird. Die Zugstäbe werden dabei in einer Ebene zentral im Baufeld mit einer Orientierung in X-Richtung positioniert. Nach Abschluss der Belichtung der Zugstäbe werden noch 9 mm Leerschichten gebaut und dann der Abkühlprozess gestartet. Nach einer Abkühlzeit von mindestens 12 Stunden werden die Zugstäbe dem Pulverkuchen entnommen und mittels Sandstrahlen gereinigt. Pro Pulverbeispiel werden 6 Zugstäbe gebaut.

Das Prozessfenster ergibt sich aus der Differenz zwischen oberer und unterer Prozesstemperatur. Dabei ist die untere Prozesstemperatur die niedrigst mögliche Prozesstemperatur, bei der die oben genannten Zugstäbe gebaut werden können. Die obere Prozesstemperatur ist die Temperatur, bei der die Pulverpartikel des Pulvers im Baufeld beginnen zu versintern bzw. Sinterhälse ausbilden. Dies kann durch Untersuchungen an Pulverproben, die aus dem Zentrum des Baufeldes entnommen werden, unter einem Mikroskop festgestellt werden.

Anhand der Zugstäbe wird der Verzug beurteilt. Der Verzug wird ermittelt, indem der jeweilige Zugstab auf eine ebene Unterlage gelegt und mittels eines Lineals oder einer Schieblehre der maximale Abstand der Oberseite des Zugstabs zur Unterlage bestimmt wird. Ein höherer Verzug entspricht einem größeren ermittelten Abstand.

### Beispiel 1: Polyamid 12-Fällpulver ohne Zusatz von Rieselhilfe (nicht erfindungsgemäß)

Ein Polyamid12-Fällpulver wird entsprechend dem in DE 29 06 647 B1 beschriebenen Verfahren hergestellt, wobei das resultierende Pulver die in DE 197 47 309 A1 beschriebenen Eigenschaften aufweist.

Das erhaltene Polymerpulver weist folgende Kennwerte auf:

| | |
|---|---|
| D50 [µm] | 56 |
| D10 [µm] | 38 |
| D90 [µm] | 81 |

| Volumenanteil von Partikeln: | |
|---|---|
| <10,48 µm | 0,7% |
| ≥10,48 µm und <30,53 µm | 4,2% |

| Fließfähigkeit: | |
|---|---|
| Avalange Angle [°] | 52 |
| absolute Break energy [kJ/kg] | 301 |

Das Pulver wird auf einer EOSINT P396 verarbeitet. Das Pulver lässt sich sowohl bei Raumtemperatur als auch bei Prozesstemperatur nur schwer dosieren und der Pulverauftrag ist schlecht. Das Pulver hat ein Prozessfenster von 8 K.

### Beispiel 2: Das Polyamid 12-Fällpulver aus Beispiel 1 mit dem Zusatz einer anorganischen Rieselhilfe (nicht erfindungsgemäß)

Das Polyamid 12-Fällpulver aus Beispiel 1 wird mit einer anorganischen Rieselhilfe (Aerosil^{®} 300, Evonik, Deutschland) vermischt, sodass der Anteil der Rieselhilfe 0,2 Gewichts-% bezogen auf das Gewicht des Gesamtpulvers ausmacht. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| Fließfähigkeit: | |
|---|---|
| Avalange Angle [°] | 34 |
| absolute Break energy [kJ/kg] | 265 |

Das Pulver wird auf einer EOSINT P396 verarbeitet. Das Pulver lässt sich sowohl bei Raumtemperatur als auch bei Prozesstemperatur gut dosieren und der Pulverauftrag ist gut. Das Pulver hat nur ein geringes Prozessfenster von 1 K. Die hergestellten Bauteile zeigen einen höheren Verzug als die Bauteile aus Beispiel 1.

### Beispiel 3: Polyamid 6.13-Fällpulver ohne Zusatz von Rieselhilfe (nicht erfindungsgemäß)

Ein Polyamid 6.13-Fällpulver wird entsprechend dem in DE 10 2004 020 453 A1 beschriebenen Verfahren hergestellt.

Das Polyamid 6.13-Fällpulver weist folgende Kennwerte auf:

| | |
|---|---|
| D50 [µm] | 55 |
| D10 [µm] | 38 |
| D90 [µm] | 78 |

| Volumenanteil von Partikeln: | |
|---|---|
| <10,48 µm | 0,9% |
| ≥10,48 µm und <30,53 µm | 5,1% |

| Fließfähigkeit: | |
|---|---|
| Avalange Angle [°] | 53 |
| absolute Break energy [kJ/kg] | 305 |

Das Pulver wird auf einer EOSINT P396 verarbeitet. Das Pulver lässt sich sowohl bei Raumtemperatur als auch bei Prozesstemperatur nur schwer dosieren und der Pulverauftrag ist schlecht. Das Pulver hat ein Prozessfenster von 3 K.

### Beispiel 4: Das Polyamid 6.13-Fällpulver aus Beispiel 3 mit dem Zusatz einer anorganischen Rieselhilfe (nicht erfindungsgemäß)

Das Polyamid 6.13-Fällpulver aus Beispiel 3 wird mit einer anorganischen Rieselhilfe (Aerosil^{®} 90, Evonik, Deutschland) vermischt, sodass der Anteil der Rieselhilfe 0,3 Gewichts-% bezogen auf das Gewicht des Gesamtpulvers ausmacht. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| Fließfähigkeit: | |
|---|---|
| Avalange Angle [°] | 33 |
| absolute Break energy [kJ/kg] | 266 |

Das Pulver wird auf einer EOSINT P396 verarbeitet. Das Pulver lässt sich sowohl bei Raumtemperatur als auch bei Prozesstemperatur gut dosieren und der Pulverauftrag ist gut. Das Pulver hat nur einen Prozesspunkt; das heißt, es konnten zwar Bauteile hergestellt werden, aber der Pulverkuchen war nach Prozessende schon recht hart. Die hergestellten Bauteile zeigen einen höheren Verzug als die Bauteile aus Beispiel 3.

### Beispiel 5: Polypropylen-Mahlpulver ohne Zusatz von Rieselhilfe (nicht erfindungsgemäß)

Ein Polypropylen-Granulat (Typ CP360H von Braskem, Rotterdam, Niederlande) wird mittels Kaltvermahlung in einer Stiftmühle vermahlen.

Das Polypropylen-Mahlpulver weist folgende Kennwerte auf:

| | |
|---|---|
| D50 [µm] | 65 |
| D10 [µm] | 26 |
| D90 [µm] | 113 |

| Volumenanteil von Partikeln: | |
|---|---|
| <10,48 µm | 1,3% |
| ≥10,48 µm und <30,53 µm | 10,2% |

| Fließfähigkeit: | |
|---|---|
| Avalange Angle [°] | 54 |
| absolute Break energy [kJ/kg] | 318 |

Das Pulver wird auf einer EOSINT P396 verarbeitet. Das Pulver lässt sich sowohl bei Raumtemperatur als auch bei Prozesstemperatur nur schwer dosieren und der Pulverauftrag ist schlecht. Das Pulver hat ein Prozessfenster von 2 K.

### Beispiel 6: Das Polypropylen-Mahlpulver aus Beispiel 5 mit dem Zusatz einer anorganischen Rieselhilfe (nicht erfindungsgemäß)

Das Polypropylen-Mahlpulver aus Beispiel 5 wird mit einer anorganischen Rieselhilfe (Aerosil^{®} R812, Evonik, Deutschland) vermischt, sodass der Anteil der Rieselhilfe 0,1 Gewichts-% bezogen auf das Gewicht des Gesamtpulvers ausmacht. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| Fließfähigkeit: | |
|---|---|
| Avalange Angle [°] | 36 |
| absolute Break energy [kJ/kg] | 274 |

Das Pulver wird auf einer EOSINT P396 verarbeitet. Das Pulver lässt sich sowohl bei Raumtemperatur als auch bei Prozesstemperatur nur schwer dosieren und der Pulverauftrag ist schlecht. Das Pulver hat nur ein Prozesspunkt; das heißt, es konnten zwar Bauteile hergestellt werden, aber der Pulverkuchen war nach Prozessende schon recht hart. Die hergestellten Bauteile zeigen einen höheren Verzug als die Bauteile aus Beispiel 5.

### Beispiel 7: Das Polyamid 12-Fällpulver aus Beispiel 1, jedoch mit einem erhöhten Anteil von Partikeln mit einer Partikelgröße kleiner als 10,48 µm und einem reduzierten Anteil von Partikeln mit einer Partikelgröße von 10,48 µm bis unter 30,53 µm (erfindungsgemäß)

Das Pulver aus Beispiel 1 wird dazu in einem ersten Schritt gesichtet, sodass Partikel mit einer Partikelgröße kleiner als 30,53 µm abgetrennt werden. Dieser Feinanteil wird in einem zweiten Sichtschritt derart gesichtet, dass Partikel mit einer Partikelgröße kleiner als 10,48 µm abgetrennt werden. Der Feinanteil des zweiten Sichtschrittes wird nun mit dem Grobgut des ersten Sichtschritts vermischt. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| | |
|---|---|
| D50 [µm] | 57 |
| D10 [µm] | 40 |
| D90 [µm] | 81 |

| Volumenanteil von Partikeln: | |
|---|---|
| <10,48 µm | 0,8% |
| ≥10,48 µm und <30,53 µm | 1,1% |

| Fließfähigkeit: | |
|---|---|
| Avalange Angle [°] | 37 |
| absolute Break energy [kJ/kg] | 263 |

Das Pulver wird auf einer EOSINT P396 verarbeitet. Das Pulver lässt sich sowohl bei Raumtemperatur als auch bei Prozesstemperatur dosieren und der Pulverauftrag ist gut. Das Pulver hat ein Prozessfenster von 7 K. Die Bauteile zeigen im Vergleich zu Beispiel 1 keinen erhöhten Verzug.

### Beispiel 8: Mischung aus dem Polyamid 12-Fällpulver aus Beispiel 1 und einem weiteren Polyamid 12-Fällpulver, die einen erhöhten Anteil von Partikeln mit einer Partikelgröße kleiner als 10,48 µm und einen reduzierten Anteil von Partikeln mit einer Partikelgröße von 10,48 µm bis unter 30,53 µm aufweist (erfindungsgemäß)

Das Polyamid 12-Fällpulver aus Beispiel 1 wird dabei in einem ersten Schritt gesichtet, sodass Partikel mit einer Partikelgröße kleiner als 30,53 µm abgetrennt werden.

Ein zweites Polyamid12-Fällpulver wird entsprechend dem in DE 29 06 647 B1 beschriebenen Verfahren hergestellt. Das zweite Polyamid12-Fällpulver weist folgende Kennwerte auf:

| | |
|---|---|
| D50 [µm] | 47 |
| D10 [µm] | 15 |
| D90 [µm] | 72 |

| Volumenanteil von Partikeln: | |
|---|---|
| <10,48 µm | 7% |
| ≥10,48 µm und <30,53 µm | 22% |

Dieses zweite Polyamid 12-Fällpulver wird gesichtet, sodass Partikel mit einer Partikelgröße kleiner als 10,48 µm abgetrennt werden. Das so erhaltene Feingut des zweiten Polyamid 12-Fällpulvers wird mit dem Grobgut des ersten Polyamid 12-Fällpulvers gemischt. Die Mischung wird in einem Mischgerät M20 S-FU der Firma MTI, Detmold, Deutschland, bei 1500 U/min für 3 min hergestellt.

Das resultierende Pulver hat folgende Kennwerte:

| | |
|---|---|
| D50 [µm] | 54 |
| D10 [µm] | 37 |
| D90 [µm] | 76 |

| Volumenanteil von Partikeln: | |
|---|---|
| <10,48 µm | 4,3% |
| ≥10,48 µm und <30,53 µm | 1,6% |
| Fließfähigkeit: | |
| Avalange Angle [°] | 35 |
| absolute Break energy [kJ/kg] | 265 |

Das Pulver wird auf einer EOSINT P396 verarbeitet. Das Pulver lässt sich sowohl bei Raumtemperatur als auch bei Prozesstemperatur dosieren und der Pulverauftrag ist gut. Das Pulver hat ein Prozessfenster von 8 K. Die Bauteile zeigen im Vergleich zu Beispiel 1 keinen erhöhten Verzug.

### Beispiel 9: Das Polyamid 6.13-Fällpulver aus Beispiel 3, jedoch mit einem erhöhten Anteil von Partikeln mit einer Partikelgröße kleiner als 10,48 µm und einem reduzierten Anteil von Partikeln mit einer Partikelgröße von 10,48 µm bis unter 30,53 µm (erfindungsgemäß)

Das Polyamid 6.13-Fällpulver aus Beispiel 3 wird dazu in einem ersten Schritt gesichtet, sodass Partikel mit einer Partikelgröße kleiner als 30,53 µm abgetrennt werden. Dieser Feinanteil wird in einem zweiten Sichtschritt derart gesichtet, dass Partikel mit einer Partikelgröße kleiner als 10,48 µm abgetrennt werden. Der Feinanteil des zweiten Sichtschrittes wird nun mit dem Grobgut des ersten Sichtschrittes vermischt. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| | |
|---|---|
| D50 [µm] | 56 |
| D10 [µm] | 42 |
| D90 [µm] | 78 |

| Volumenanteil von Partikeln: | |
|---|---|
| <10,48 µm | 2,1% |
| ≥10,48 µm und <30,53 µm | 0,9% |

| Fließfähigkeit: | |
|---|---|
| Avalange Angle [°] | 36 |
| absolute Break energy [kJ/kg] | 269 |

Das Pulver wird auf einer EOSINT P396 verarbeitet. Das Pulver lässt sich sowohl bei Raumtemperatur als auch bei Prozesstemperatur dosieren und der Pulverauftrag ist gut. Das Pulver hat ein Prozessfenster von 5 K. Die Bauteile zeigen im Vergleich zu Beispiel 1 keinen erhöhten Verzug.

### Beispiel 10: Mischung aus dem Polyamid 12-Fällpulver aus Beispiel 1 und dem Polyamid 6.13-Fällpulver aus Beispiel 3, die einen erhöhten Anteil von Partikeln mit einer Partikelgröße kleiner als 10,48 µm und einen reduzierten Anteil von Partikeln mit einer Partikelgröße von 10,48 µm bis unter 30,53 µm aufweist (erfindungsgemäß)

Das Polyamid 12-Fällpulver aus Beispiel 1 wird dazu gesichtet, sodass Partikel mit einer Partikelgröße kleiner als 30,53 µm abgetrennt werden. Weiterhin wird das Polyamid 6.13-Fällpulver aus Beispiel 3 gesichtet, sodass Partikel mit einer Partikelgröße kleiner als 10,48 µm abgetrennt werden. Das Feingut des Polyamid 6.13-Fällpulvers wird nun mit dem Grobgut des Polyamid 12-Fällpulvers vermischt. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| | |
|---|---|
| D50 [µm] | 56 |
| D10 [µm] | 38 |
| D90 [µm] | 81 |

| Volumenanteil von Partikeln: | |
|---|---|
| <10,48 µm | 4,3% |
| ≥10,48 µm und <30,53 µm | 1,2% |

| Fließfähigkeit: | |
|---|---|
| Avalange Angle [°] | 34 |
| absolute Break energy [kJ/kg] | 271 |

Das Pulver wird auf einer EOSINT P396 verarbeitet. Das Pulver lässt sich sowohl bei Raumtemperatur als auch bei Prozesstemperatur dosieren und der Pulverauftrag ist gut. Das Pulver hat ein Prozessfenster von 8 K. Die Bauteile zeigen im Vergleich zu Beispiel 1 keinen erhöhten Verzug.

### Beispiel 11: Das Polypropylen-Mahlpulver aus Beispiel 5, jedoch mit einem erhöhten Anteil von Partikeln mit einer Partikelgröße kleiner als 10,48 µm und einem reduzierten Anteil von Partikeln mit einer Partikelgröße von 10,48 µm bis unter 30,53 µm (erfindungsgemäß)

Das Polypropylen-Mahlpulver aus Beispiel 5 wird dazu in einem ersten Schritt gesichtet, sodass Partikel mit einer Partikelgröße kleiner als 30,53 µm abgetrennt werden. Dieser Feinanteil wird in einem zweiten Sichtschritt derart gesichtet, dass Partikel mit einer Partikelgröße kleiner als 10,48 µm abgetrennt werden. Der Feinanteil des zweiten Sichtschrittes wird dann mit dem Grobgut des ersten Sichtschritts vermischt. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| | |
|---|---|
| D50 [µm] | 65 |
| D10 [µm] | 44 |
| D90 [µm] | 113 |

| Volumenanteil von Partikeln: | |
|---|---|
| <10,48 µm | 1,7% |
| ≥10,48 µm und <30,53 µm | 0,4% |

| Fließfähigkeit: | |
|---|---|
| Avalange Angle [°] | 37 |
| absolute Break energy [kJ/kg] | 273 |

Das Pulver wird auf einer EOSINT P396 verarbeitet. Das Pulver lässt sich sowohl bei Raumtemperatur als auch bei Prozesstemperatur dosieren und der Pulverauftrag ist gut. Das Pulver hat ein Prozessfenster von 5 K. Die Bauteile zeigen im Vergleich zu Beispiel 1 keinen erhöhten Verzug.

### Beispiel 12: Mischung aus dem Polypropylen-Mahlpulver aus Beispiel 5 und einem weiteren Polypropylen-Mahlpulver, die einen erhöhten Anteil von Partikeln mit einer Partikelgröße kleiner als 10,48 µm und einen reduzierten Anteil von Partikeln mit einer Partikelgröße von 10,48 µm bis unter 30,53 µm aufweist (erfindungsgemäß)

Das Polypropylen-Mahlpulver aus Beispiel 5 wird dazu in einem ersten Schritt gesichtet, sodass Partikel mit einer Partikelgröße kleiner als 30,53 µm abgetrennt werden.

Zur Herstellung eines zweiten Polypropylen-Mahlpulvers wird ein Polypropylen-Granulat (Typ CP360H von Braskem, Rotterdam, Niederlande) mittels Kaltvermahlung in einer Stiftmühle vermahlen. Das zweite Polypropylen-Mahlpulver weist folgende Kennwerte auf:

| | |
|---|---|
| D50 [µm] | 44 |
| D10 [µm] | 21 |
| D90 [µm] | 64 |

| Volumenanteil von Partikeln: | |
|---|---|
| <10,48 µm | 6,1% |
| ≥10,48 µm und <30,53 µm | 12,7% |

Das zweite Polypropylen-Mahlpulver wird gesichtet, sodass Partikel mit einer Partikelgröße kleiner als 10,48 µm abgetrennt werden. Das Feingut des zweiten Polypropylen-Mahlpulvers wird mit dem Grobgut des Polypropylen-Mahlpulvers aus Beispiel 5 gemischt. Die Mischung wird in einem Mischgerät M20 S-FU der Firma MTI, Detmold, Deutschland, bei 1500 U/min für 3 min hergestellt.

Das resultierende Pulver weist folgende Kennwerte auf:

| | |
|---|---|
| D50 [µm] | 65 |
| D10 [µm] | 44 |
| D90 [µm] | 113 |

| Volumenanteil von Partikeln: | |
|---|---|
| <10,48 µm | 3,8% |
| ≥10,48 µm und <30,53 µm | 0,8% |

| Fließfähigkeit: | |
|---|---|
| Avalange Angle [°] | 35 |
| absolute Break energy [kJ/kg] | 270 |

Das Pulver wird auf einer EOSINT P396 verarbeitet. Das Pulver lässt sich sowohl bei Raumtemperatur als auch bei Prozesstemperatur dosieren und der Pulverauftrag ist gut. Das Pulver hat ein Prozessfenster von 5 K. Die Bauteile zeigen im Vergleich zu Beispiel 1 keinen erhöhten Verzug.

Die nicht erfindungsgemäßen Beispiele 1, 3 und 5 ohne Rieselhilfe weisen eine schlechte Fließfähigkeit auf. Durch Zusatz einer anorganischen Rieselhilfe kann die Fließfähigkeit deutlich verbessert werden, jedoch wird das Prozessfenster reduziert und die erhaltenen Teile zeigen eine höhere Verzugsneigung (nicht erfindungsgemäßen Beispiele 2, 4 und 6). Die erfindungsgemäßen Beispiele 7-12 zeigen hingegen deutlich verbesserte Fließfähigkeiten der Pulver bei gleichbleibenden Prozessfenster. Die so erhaltenen Bauteile zeigen zudem auch keine erhöhte Verzugsneigung.

## Patentansprüche

1. Pulver, insbesondere zur Verwendung in einem Powder-Bed-Fusion-Verfahren, umfassend ein Polymerpulver, wobei das Polymerpulver einen Volumenanteil von 0,5% bis 15% an Partikeln mit einer Partikelgröße kleiner als 10,48 µm und einen Volumenanteil von nicht mehr als 4,0% an Partikeln mit einer Partikelgröße im Bereich von größer als oder gleich 10,48 µm bis kleiner als 30,53 µm aufweist, wobei die Volumenanteile und die Partikelgrößen mittels dem in der Beschreibung dargestellten Verfahren basierend auf Laserbeugung bestimmt werden.

2. Pulver gemäß Anspruch 1, **dadurch gekennzeichnet, dass** das Pulver im Wesentlichen frei von anorganischer Rieselhilfe ist oder das Pulver mindestens eine anorganische Rieselhilfe umfasst, wobei der Anteil der mindestens einen anorganischen Rieselhilfe, bezogen auf das Gesamtgewicht des Pulvers, bevorzugt weniger als 0,1 Gewichts-%, weiter bevorzugt weniger als 0,05 Gewichts-%, besonders bevorzugt weniger als 0,01 Gewichts-% beträgt.

3. Pulver gemäß irgendeinem der vorstehenden Ansprüche, **dadurch gekennzeichnet, dass** der Anteil des Polymerpulvers, bezogen auf das Gesamtgewicht des Pulvers, mindestens 30 Gewichts-%, mindestens 50 Gewichts-%, bevorzugt mindestens 70 Gewichts-%, weiter bevorzugt mindestens 90 Gewichts-% oder noch weiter bevorzugt mindestens 95 Gewichts-% beträgt.

4. Pulver gemäß irgendeinem der vorstehenden Ansprüche, **dadurch gekennzeichnet, dass** das Polymerpulver
- einen Volumenanteil von mindestens 1,0%, bevorzugt mindestens 1,5%, besonders bevorzugt mindestens 2,0% an Partikeln mit einer Partikelgröße kleiner als 10,48 µm aufweist; und/oder
- einen Volumenanteil von maximal 12%, bevorzugt maximal 10%, weiter bevorzugt maximal 8,0%, besonders bevorzugt maximal 6,0% an Partikeln mit einer Partikelgröße kleiner als 10,48 µm aufweist; und/oder
- das Polymerpulver einen Volumenanteil von nicht mehr als 3,0%, bevorzugt nicht mehr als 2,0%, besonders bevorzugt nicht mehr als 1,6% an Partikeln mit einer Partikelgröße im Bereich von größer als oder gleich 10,48 µm bis kleiner als 30,53 µm aufweist.

5. Pulver gemäß irgendeinem der vorstehenden Ansprüche, **dadurch gekennzeichnet, dass** die Partikel des Polymerpulvers mit einer Partikelgröße kleiner als 10,48 µm, die Partikel des Polymerpulvers mit einer Partikelgröße im Bereich von größer als oder gleich 10,48 µm bis kleiner als 30,53 µm und/oder Partikel des Polymerpulvers mit einer Partikelgröße größer als oder gleich 30,53 µm durch Vermahlen, Fällung, Polymerisation, Schneiden von Fasern oder Compoundieren einer Polymerschmelze in einem nicht homogen mischbaren Stoff hergestellt werden, wobei Vermahlen und Fällung bevorzugt sind.

6. Pulver gemäß irgendeinem der vorstehenden Ansprüche, **dadurch gekennzeichnet, dass** das Polymerpulver Partikel umfasst, die aus einem Material gebildet sind, das mindestens ein thermoplastisches Polymer umfasst, wobei das mindestens eine thermoplastische Polymer bevorzugt ausgewählt ist aus der Gruppe bestehend aus Polyolefinen, Polyethylen, Polypropylen, Polyvinylchlorid, Polystyrol, Polycarbonaten, Polyoxymethylen, Polyimiden, Polysulfonen, Poly-(N-methylmethacrylimide), Polycarbonat (PC)-AcrylnitrilButadien-Styrol (ABS), lonomeren, Polymethylmethacrylat, Polyvinylidenflouriden, Polyetherketonen, Polyaryletherketonen, Polyamiden sowie Copolymeren, Mischungen und Kombinationen davon, wobei das mindestens eine thermoplastische Polymer besonders bevorzugt ein Homopolyamid, ein Copolyamid oder eine Mischung aus Homo- und Copolyamid umfasst.

7. Pulver gemäß irgendeinem der vorstehenden Ansprüche, **dadurch gekennzeichnet, dass** die Partikel des Polymerpulvers mit einer Partikelgröße kleiner als 10,48 µm, die Partikel des Polymerpulvers mit einer Partikelgröße im Bereich von größer als oder gleich 10,48 µm bis kleiner als 30,53 µm und die Partikel des Polymerpulvers mit einer Partikelgröße größer als oder gleich 30,53 µm aus demselben Material gebildet sind, wobei das Material bevorzugt aus den in Anspruch 6 genannten Materialien ausgewählt ist.

8. Verfahren zur Herstellung eines Pulvers gemäß irgendeinem der Ansprüche 1 bis 7, wobei das Polymerpulver durch zumindest ein Kombinieren von mindestens einem ersten Pulver umfassend polymerhaltige Partikel und einem zweiten Pulver umfassend polymerhaltige Partikel bereitgestellt wird.

9. Verfahren gemäß Anspruch 8, **dadurch gekennzeichnet, dass** das erste Pulver im Wesentlichen keine Partikel mit einer Partikelgröße kleiner als 30,53 µm aufweist und/oder das zweite Pulver im Wesentlichen nur Partikel mit einer Partikelgröße kleiner als 10,48 µm aufweist und/oder die Partikel des ersten Pulvers und die Partikel des zweiten Pulvers im Wesentlichen aus demselben Material gebildet sind.

10. Verfahren gemäß irgendeinem der Ansprüche 8 oder 9, **dadurch gekennzeichnet, dass** das erste Pulver und/oder das zweite Pulver durch einen oder mehrere Sichtschritte erhalten werden.

11. Verfahren gemäß irgendeinem der Ansprüche 8 bis 10, **dadurch gekennzeichnet, dass**
- das erste Pulver das Grobgut umfasst, das durch Sichten eines ersten Primärpulvers bei 30,53 µm erhalten wird, wobei das erste Primärpulver bevorzugt eine D50-Partikelgröße von 40 µm bis 120 µm, weiter bevorzugt von 40 µm bis 90 µm aufweist; und/oder
- das zweite Pulver das Feingut umfasst, das durch Sichten eines zweiten Primärpulvers bei 10,48 µm erhalten wird, wobei das zweite Primärpulver bevorzugt eine D50-Partikelgröße von 1 µm bis 20 µm aufweist.

12. Verfahren gemäß irgendeinem der Ansprüche 8 bis 10, **dadurch gekennzeichnet, dass** das erste Pulver und das zweite Pulver erhalten werden durch
- ein erstes Sichten eines Primärpulvers bei 30,53 µm, wobei das erhaltene Grobgut des ersten Sichtens das erste Pulver bildet; und
- ein zweites Sichten des Feinguts des ersten Sichtens bei 10,48 µm, wobei das erhaltene Feingut des zweiten Sichtens das zweite Pulver bildet;
wobei das Primärpulver bevorzugt eine D50-Partikelgröße von 40 µm bis 120 µm, bevorzugt 40 µm bis 90 µm, aufweist.

13. Pulverbett umfassend ein Pulver gemäß irgendeinem der Ansprüche 1 bis 7, wobei das Pulver bevorzugt nach einem Verfahren gemäß irgendeinem der Ansprüche 8 bis 12 hergestellt ist, insbesondere zur Verwendung in einer Fusionszone eines Powder-Bed-Fusion-Verfahrens.

14. Formkörper hergestellt mittels eines Powder-Bed-Fusion-Verfahrens unter Verwendung eines Pulverbetts nach Anspruch 13.

15. Verwendung eines Pulvers nach irgendeinem der Ansprüche 1 bis 7 oder eines Pulverbetts nach Anspruch 13 in einem Powder-Bed-Fusion-Verfahren, wobei das Pulver bevorzugt nach dem Verfahren gemäß irgendeinem der Ansprüche 8 bis 12 hergestellt ist.
